# EUROPEAN PATENT APPLICATION

(11) **EP 1 148 670 A1**
(43) Date of publication of application: **24.10.2001**
(21) Application number: 00976406.9
(22) Date of filing: 21.11.2000
(51) Int. Cl.: H04H 1/00, H04N 5/38, H04N 7/08

(54) **PROGRAM GUIDE INFORMATION GENERATING/SENDING SYSTEM**

(30) Priority: 22.11.1999 JP 33168499
(71) Applicant: MATSUSHITA ELECTRIC INDUSTRIAL CO., LTD., Kadoma-shi, Osaka 571-0050 (JP)
(72) Inventor: KAGEYAMA, Mitsuhiro, Tachikawa-shi, Tokyo 190-0032 (JP); NAKAMURA, Yasuhiro, Kawasaki-shi, Kanagawa 215-0023 (JP)
(74) Representative: Casalonga, Axel
(86) International application number: JP0008218
(87) International publication number: WO0139410

(57) **Abstract**

The present invention discloses a present-following event information generating and outputting system that can output present-following event information securely even if a program Is to be broadcast on a channel that is not described on a schedule. The system includes a program schedule editing part 201 for editing program information and a program schedule, a program guide information managing part 202 for managing the program information and the program schedule edited, a present-following event information generating part 203 for generating single event information and a present-following event information transmission schedule from the program information and the program schedule, and a present-following event information outputting part 206 for generating present-following event information from the single event information and the present-following event information transmission schedule to output the same in response to input of the program start notification. The system features that it comprises an immediate update-capable single event information generating part 204 for generating, in advance, from the above-mentioned program information, single event information corresponding to all channels that can be handled by the system. Such a configuration makes it possible for the system to quickly output program guide information even if the program is to be broadcast on an unscheduled channel.

## Description

### TECHNICAL FIELD

The present invention relates to a program guide information generating and outputting system that generates and outputs "present-following event information," indicative of currently broadcast program data and program data to be broadcast next, as program guide information on program data (video and audio) to be broadcast at each channel. It should be noted that in the specification the term "event" denotes each individual program to be broadcast.

### BACKGROUND ART

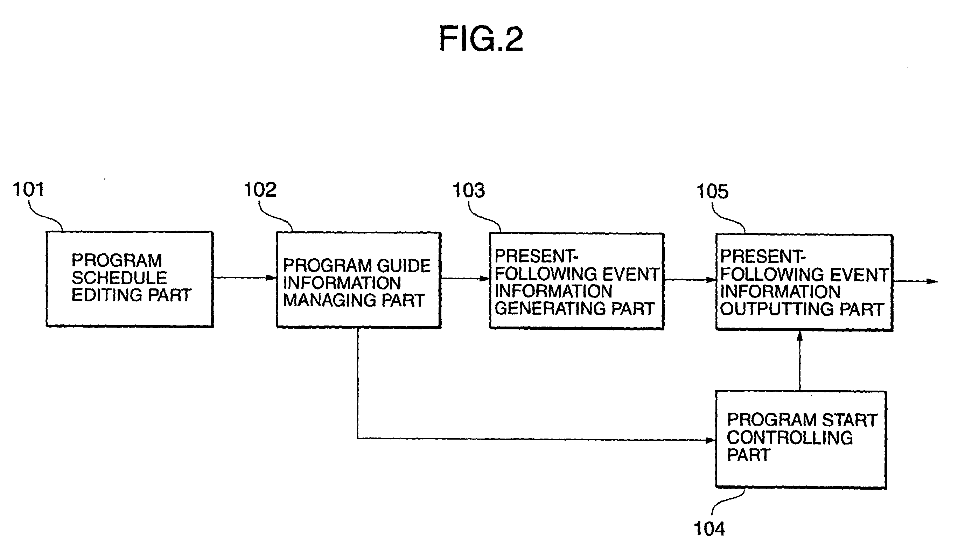

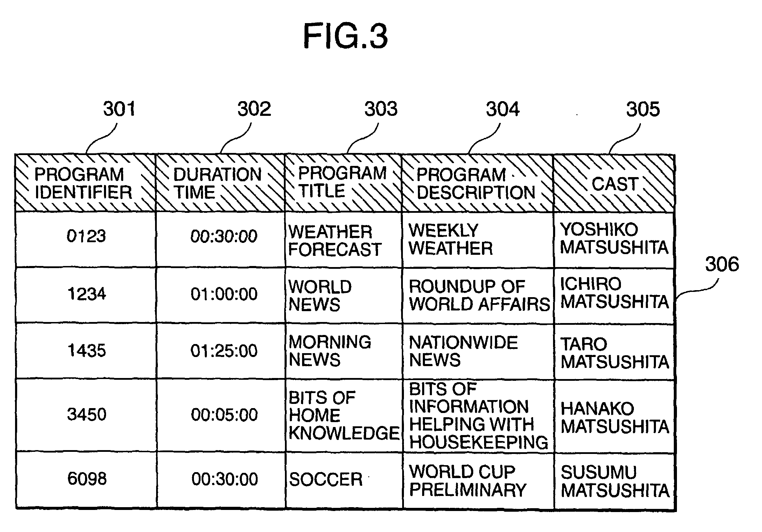

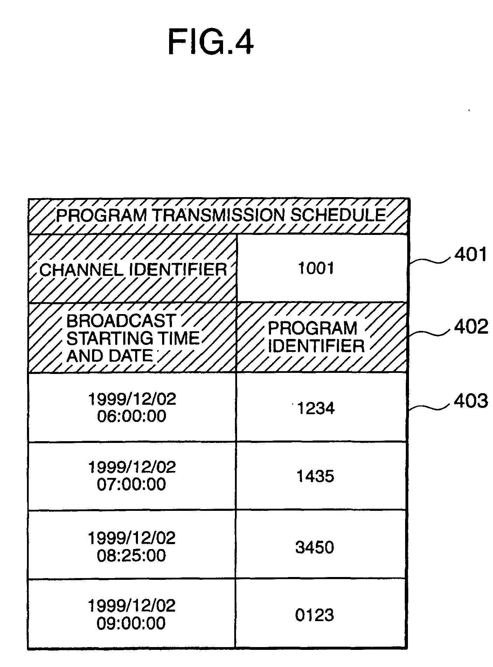

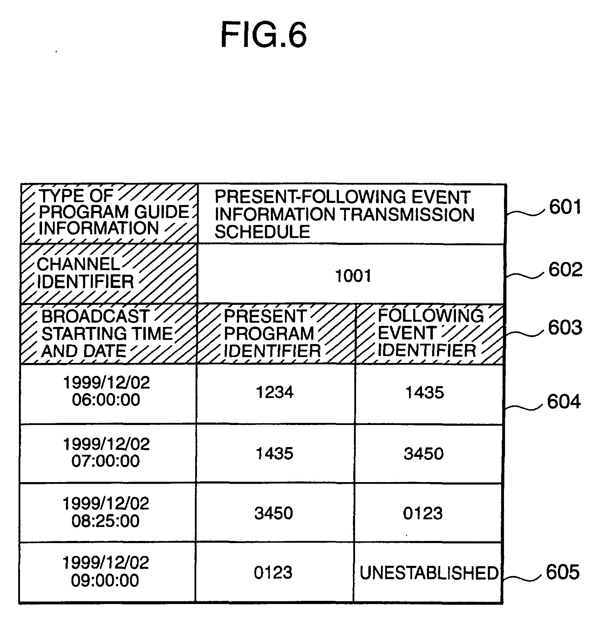

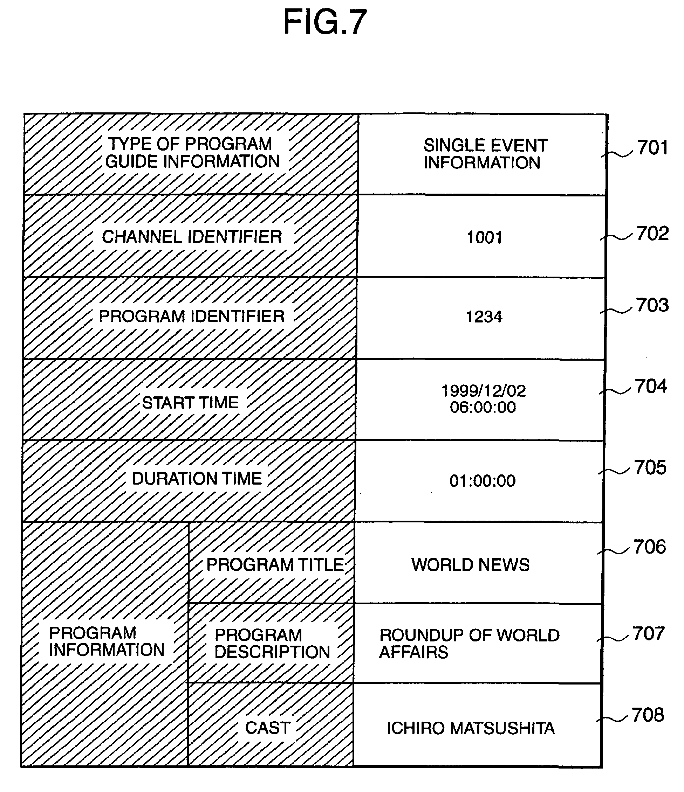

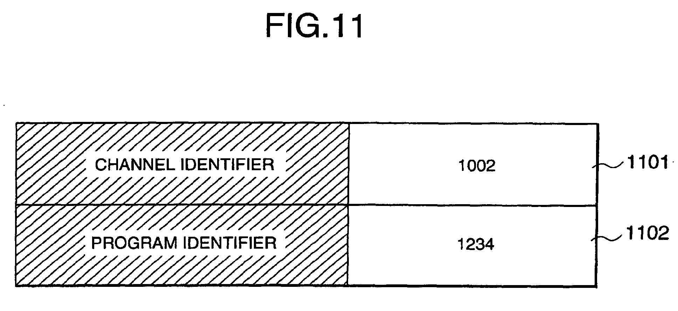

Fig. 2 shows a conventional program guide information generating system, which includes a program schedule editing part 101, a program guide information managing part 102, a present-following event information generating part 103, a program start controlling part 104, and a present-following event information outputting part 105. The program schedule editing part 101 edits a program transmission schedule (Fig. 4) and program information (Fig. 3) for each channel. The program guide information managing part 102 manages the information edited in the program schedule editing part 101 to output the program schedule and the program information to the present-following event information generating part 103, and the program schedule to the program start controlling part 104. The present-following event information generating part 103 receives the program transmission schedule and the program information from the program guide information managing part 102 to generate single event information (Fig. 7) related to each individual event and a present-following event information transmission schedule (Fig. 6) indicative of a transmission schedule of each present-following event information. The program start controlling part 104 transmits a program start notification (Fig. 11) according to the program transmission schedule acquired from the program guide information managing part 102 in response to an operator's message. The present-following event information outputting part 105 generates present-following event information on the basis of the single event information and the present-following event information transmission schedule received from the present-following event information generating part 103. Then the present-following event information outputting part 105 outputs the present-following event information on the basis of the program start notification received from the program start controlling part 104.

In the program guide information generating and outputting system, the program information is uniquely identified by a channel identifier and a program identifier.

The operator edits the program schedule and the program information for each channel in the program schedule editing part 101 while associating the edited program schedule with the edited program information by assigning a program identifier.

The program guide information managing part 102 holds the program schedule and the program information for each channel edited by the operator in the program schedule editing part 101. Then the program guide information managing part 102 outputs the program information and the program schedule to the present-following event information generating part 103.

The program information is managed, for example, as shown in Fig. 3, by a program identifier 301, in which a duration time 302, a program title 303, a program description 304 and a cast 305 are described as the program information. The program schedule is managed, for example, as shown in Fig. 4, by a channel identifier 401, below which broadcast starting time and dates, and program identifiers 402 are registered sequentially from the earliest broadcast starting time and date.

The present-following event information generating part 103 generates the single event information and the present-following event information transmission schedule from the program information and the program schedule acquired for each channel.

The single event information is information that is uniquely determined, for example, as shown in Fig. 7, by a channel identifier 702 and a program identifier 703. The single event information describes start time and date 704, duration time 705, and program information 706 to 708. The present-following event information schedule is managed, for example, as shown in Fig. 6, by a channel identifier 602, below which program identifiers corresponding to present events and program identifiers corresponding to following events are described sequentially from the earliest broadcast starting time and date (see 603 and 604).

The present-following event information generating part 103 outputs the generated single event information and the generated present-following event information transmission schedule to the present-following information outputting part 105.

The program start controlling part 104 outputs the program start notification to the present-following event information outputting part 105 at program start timing according to the program schedule edited for each channel in the program schedule editing part 101. The program start controlling part 104 may also output a program start notification for a channel specified by the operator's message.

The present-following event information outputting part 105, which has received the single event information and the preset-following event information transmission schedule, generates present-following event information corresponding to a program to be started in response to input of the program start notification from the program start controlling part 104.

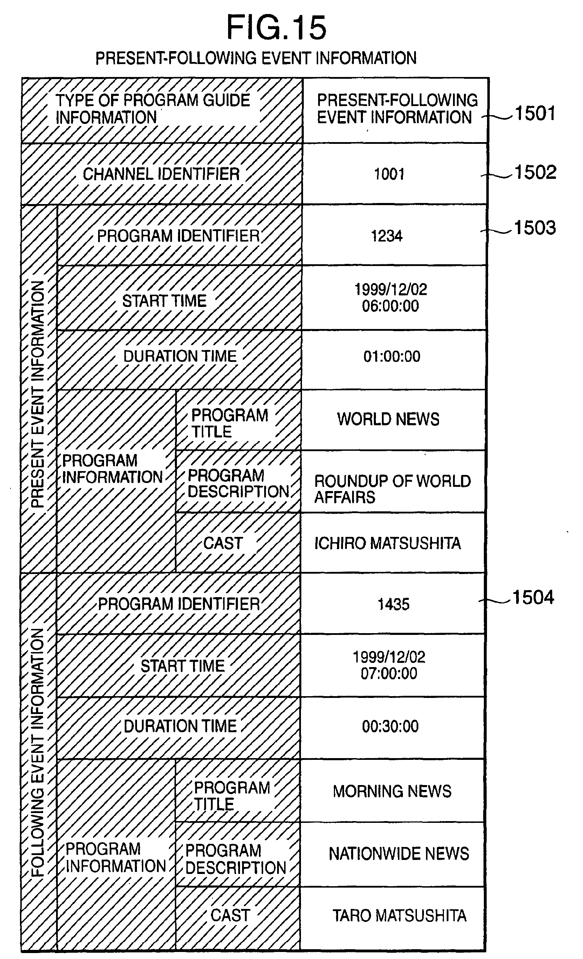

The present-following event information is identified, for example, as shown in Fig. 15, by a channel identifier 1502, below which information 1503 on the present event, such as its program identifier, start time and date, duration time and program description, and like information 1504 related to the following event are both described. The present-following information outputting part 105 repeats the transmission of the generated present-following event information at regular intervals.

The program start notification describes, for example, as shown in Fig. 11, a channel identifier 1101 identifying a channel and a program identifier 1102 identifying a program. The present-following event information outputting part 105 searches the present-following event information transmission schedule for the channel identifier and the program identifier described in the program start notification. Then the present-following event information outputting part 105 generates and outputs the present-following event information from the corresponding channel identifier and program identifier.

A receiver, not shown, acquires the present-following event information, and from the present-following event information received, it identifies the event currently broadcast and the event to be broadcast next to configure the program information for the present event and the following event. Thus a viewer can operate keys to display the program information on a display screen.

If the viewer has pre-programmed recording of a program on the basis of the channel identifier and the program identifier, the receiver will direct its attention to the present-following event information that contains the corresponding channel identifier. Then, if the program identifier for the following event contained in the present-following event information corresponds to that of the pre-programmed recording target, the recording is started at the time of appearance of the present-following event information that contains the preset-event program identifier corresponding to the program identifier concerned.

Suppose that the receiver starts receiving the present-following event information on the channel concerned before starting the pre-programmed recording according to the program schedule. If the program identifier of the next event contained in the present-following event information received is not that of the pre-programmed recording target, the receiver recognizes that the program schedule is changed. In this case, the receiver either stops the pre-programmed recording or searches the program schedule for the corresponding program identifier to renew the pre-programmed recording time.

Typical standards in which the above-mentioned present-following event information can be described are the DVB/SI standard (EST300 468 Digital Broadcasting systems for television, sound and data services; Specification for Service Information (SI) in Digital Video Broadcasting (DVD) systems (1998-2), and the "ARIB STD-B10" standard (its version 1.0 developed on June 19, 1997) standardized by the ARIB (Association of Radio Industries and Businesses).

However, when a program not registered in the program schedule received beforehand is to be broadcast, the conventional program guide information generating and outputting system, as shown in Fig. 2, cannot quickly output the present-following event information corresponding to the program. The conventional system cannot also give proper response to event relay broadcasting and program interrupt broadcasting defined by the ARIB and the BS-P consortium in the *BS digital broadcasting PSI/SI operating regulations.*

The event relay broadcasting denotes a broadcasting system in which a program on the air on a channel is continuously broadcast by rushing the program to another channel without editing the program schedule in the program schedule editing part 101. Suppose that a baseball game is being broadcast on A channel. In this case, if an emergency program is to be broadcast on A channel, the baseball game may be continued on B channel.

To output the present-following event information that meets the event relay broadcasting requirements, the program guide information generating and outputting system needs to have the following two capabilities of:
(1) tuning one channel to another to send present-following event information related to a program that the program schedule editing part 101 has listed on a program schedule for the one channel but not on a program schedule for the other channel; and
(2) putting, on present-following event information related to a program on the air on one channel, event relay information informing that the program on the air on the channel is to be shifted to another channel.

Suppose that the program schedule editing part 101 has registered a program X on a program schedule for a channel A as a program belonging to the channel A, and the present-following event information generating part 103 has generated single event information on the program X. Suppose further that the present-following event information outputting part 105 is outputting the present-following event information corresponding to the program X in response to the program start notification from the program start controlling part 104. In this situation, when the program X is to be rushed to a channel B due to an unexpected external trigger, the program start controlling part 104 outputs, to the present-following event information outputting part 105, a program start notification in which a channel identifier identifying the channel B and a program identifier identifying the program X are listed.

In this case, since the conventional system does not allow the present-following event information outputting part 105 to hold program guide information corresponding to the program X that belongs to the channel B, the present-following program guide information that sets the program X as the present program cannot be sent to the channel B.

It is also necessary to inform the receiver that the program X on the air on the channel A is to be shifted to the channel B. To 'meet this requirement, event relay information informing that the present event program X is to be shifted to the channel B also needs to be added to the present-following event information on the program X during broadcasting the program X on the channel A. Such a requirement cannot also be satisfied in the conventional system.

On the other hand, the program interrupt broadcasting denotes a broadcasting system that interrupts a program on the air on a channel by broadcasting another program on the channel. In this case, the program stopped halfway is restarted after finishing another program. The program interrupted with another program during broadcasting is called the split program, while the program that has interrupted the split program is called the interrupt program. To output the present-following event information that meets the event interrupt broadcasting requirements, the program guide information generating and outputting system needs to have the following capability of:
putting single event information corresponding to the split program on the following event of the present-following event information to be sent while the interrupt program is broadcasting.

Suppose that the program schedule editing part 101 outputs, during broadcasting the program X on the channel A, a program schedule for the channel A on which the program X on the air is to be interrupted with a program Y. In this case, the present-following event information generating part 103, which receives the program schedule, is required to generate a program schedule that assigns the present program identifier to the program Y and the following program identifier to the program X on the present-following event information transmission schedule.

### DISCLOSURE OF THE INVENTION

It is an object of the present invention to provide a program guide information generating and outputting system that can give proper response to a broadcasting system whose requirements are not satisfied in the conventional system, and that can output present-following event information adapted to the requirements in the broadcasting system even if event relay broadcasting or program interrupt broadcasting is carried out.

In one aspect of the present invention, there is provided a program guide information generating and outputting system, which includes a program schedule editing part for editing program information and a program schedule, a program guide information managing part for managing the program information and the program schedule edited, a present-following event information generating part that receives the program information and the program schedule to generate single event information and a present-following event information transmission schedule, a program start controlling part for outputting a program start notification, and a present-following event information outputting part that generates present-following event information from the single event information and the present-following event information transmission schedule and outputs the same in response to input of the program start notification, the system comprising an immediate update-capable single event information generating part that in advance generates, from the above-mentioned program information, single event information corresponding to all channels that can be handled by the system.

This system can quickly output program guide information even when an external trigger causes a program to be broadcast on an unscheduled channel.

In another aspect of the present invention, the program guide information generating and outputting system further comprises an event relay information generating part that generates single event information with event relay information attached to the single event information, and an event relay program starting control part that outputs an event relay notification before changing channels for event relay broadcasting, wherein the present-following event information outputting part generates present-following event information from the single event information with the event relay information to output the same in response to input of the event relay notification.

This system can quickly output present-following event information by putting, on the present-following event information, event relay information that informs a receiver of shifting a program on the air on one channel to another channel for event relay broadcasting.

In still another aspect of the present invention, the program guide information generating and outputting system further comprises a program-interrupted schedule registering part that generates and registers a program-interrupted schedule in the program schedule editing part, and a program-interrupted schedule generating part that generates, on the basis of the program-interrupted schedule, a present-following event information transmission schedule indicating that, when the present event is an interrupt program, the following event is the interrupted program. In the system, the present-following event information outputting part generates present-following event information from the generated present-following event information transmission schedule.

This system can quickly output present-following event information adapted the program interrupt broadcasting.

### BRIEF DESCRIPTION OF THE DRAWINGS

Fig. 1 is a block diagram showing a configuration of a program guide information generating and outputting system according to a first embodiment of the present invention;
Fig. 2 is a block diagram showing a configuration of a conventional program guide information generating and outputting system;
Fig. 3 is a table showing program information;
Fig. 4 is a table showing a program transmission schedule;
Fig. 5 is a table showing channel information;
Fig. 6 is a table showing a present-following event information transmission schedule;
Fig. 7 is a table showing single event information;

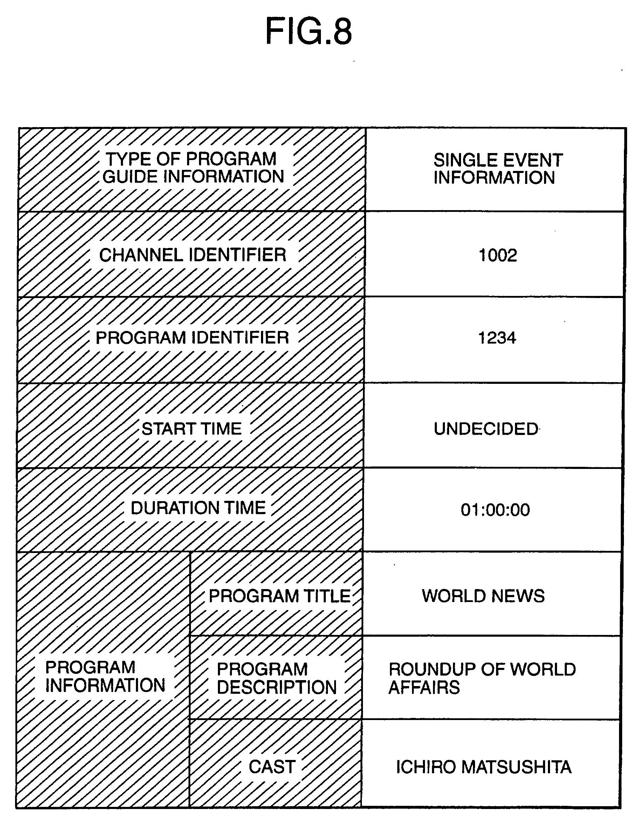

Fig. 8 is a table showing preliminarily generated single event information;
Figs. 9A and 9B are flowcharts showing as a whole the process to generate a present-following event information transmission schedule according to the first embodiment of the present invention;
Fig. 10 is a flowchart showing the process to generate a single event information according to the first embodiment of the present invention;
Fig. 11 is a table showing a program start notification;
Figs. 12A and 12B are flowcharts showing as a whole the process to generate immediate update-capable single event information according to the first embodiment of the present invention;
Fig. 13 is a diagram showing how to merge present-following event information transmission schedules according to the first embodiment of the present invention;
Figs. 14A and 14B are flowcharts showing as a whole process steps upon receiving the program start notification according to the first embodiment of the present invention;
Fig. 15 is a table showing present-following event information;
Fig. 16 is a block diagram showing a configuration of a program guide information generating and outputting system according to a second embodiment of the present invention;
Fig. 17 is a table showing single event information with event relay information;
Figs. 18A and 18B are flowcharts showing as a whole process steps upon receiving an event relay notification according to the second embodiment of the present invention;
Fig. 19 is a table showing the event relay notification;
Fig. 20 is a table showing the single event information with the event relay information;
Fig. 21. is a table showing present-following event information with event relay information;
Fig. 22 is a diagram showing the flow of output of the present-following event information;
Fig. 23 is a table showing a program start notification for a channel to which the program is shifted;
Fig. 24 is a table showing a program start notification for a channel from which the program is shifted;
Fig. 25 is a block diagram showing a configuration of a program guide information generating and outputting system according to a third embodiment of the present invention;
Figs. 26A and 26B are flowcharts showing as a whole process steps upon receiving an event relay notification according to the third embodiment of the present invention;
Fig. 27 is a block diagram showing a configuration of a program guide information generating and outputting system according to a fourth embodiment of the present invention;
Fig. 28 is a table showing a program schedule with program interrupt information (also called a program-interrupted schedule);
Figs. 29A, 29B and 29C are flowcharts showing as a whole the process to generate a program-interrupted present-following event information transmission schedule according to the fourth embodiment of the present invention;
Fig. 30 is a table showing a program-interrupted present-following event information transmission schedule;
Fig. 31 is a block diagram showing a configuration of a program guide information generating and outputting system according to a fifth embodiment of the present invention;
Figs. 32A and 32B are flowcharts showing as a whole process steps upon receiving a program start notification according to the fifth embodiment of the present invention;
Figs. 33A and 33B are flowcharts showing as a whole the process to generate a program-interrupted present-following event information transmission schedule according to the fifth embodiment of the present invention;
Fig. 34 is a table showing program information with event relay flags; and

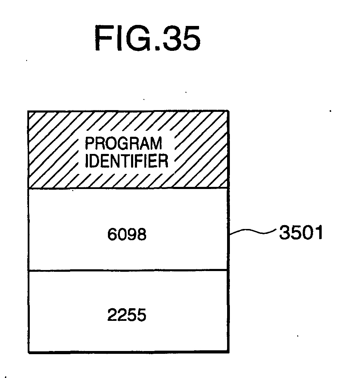

Fig. 35 is a table showing a program to be relayed.

### MODES FOR CARRYING OUT THE INVENTION

The following describes embodiments according to the present invention with reference to the accompanying drawings.

### (First Embodiment)

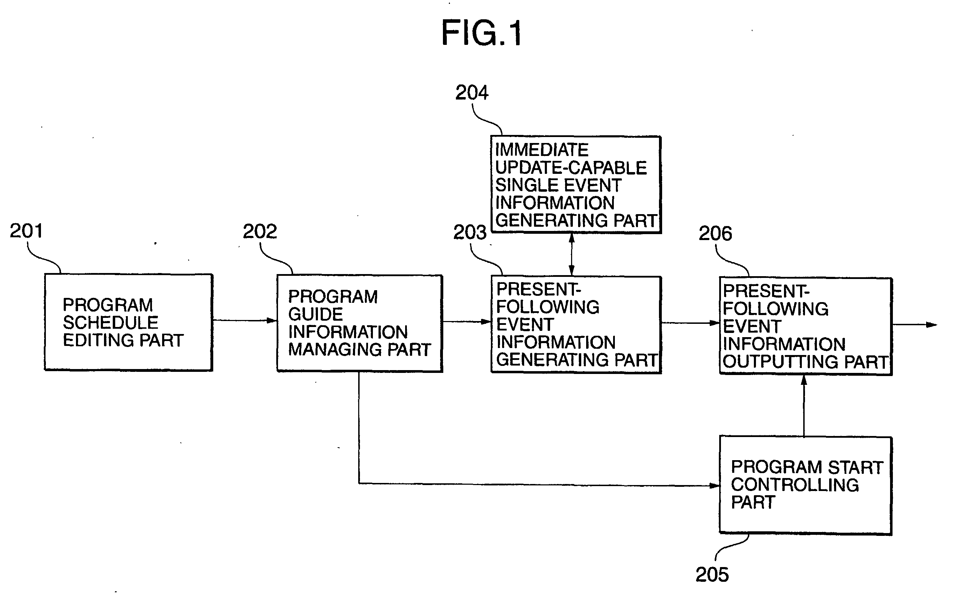

As shown in Fig. 1, the program guide information generating and outputting system includes a program schedule editing part 201, a program guide information managing part 202, a present-following event information generating part 203, an immediate update-capable single event information generating part 204, a program start controlling part 205, and a present-following event information outputting part 206. The program schedule editing part 201 edits a program transmission schedule and program information for each channel. The program guide information managing part 202 manages the information edited in the program schedule editing part 201. The present-following event information generating part 203 receives the program transmission schedule and the program information from the program guide information managing part 202 to generate single event information and a present-following event information transmission schedule. The immediate update-capable single event information generating part 204 receives the program transmission schedule and the program information from the present-following event information generating part 203 to generate immediate update-capable single event information from these information and preset channel information held therein beforehand so as to output the same to the present-following event information generating part 203. The program start controlling part 205 transmits a program start notification according to the program transmission schedule edited in the program schedule editing part 201 in response to an external trigger. The present-following event information outputting part 206 receives the single event information and the present-following event information transmission schedule from the present-following event information generating part 203 to generate and output present-following event information in response to the program start notification transmitted from the program start controlling part 205.

Description will be made next about the operation of the program guide information generating and outputting system.

The program schedule editing part 201 has the capabilities of editing and registering the program information and the program schedule for each channel in response to operator's messages.

According to the embodiment, the program information can be uniquely specified by a program identifier, and the program schedule for each channel can be uniquely specified by a channel identifier. The program schedule and the program information are associated with each other by the program identifier.

Fig. 3 shows an example of the program information. As shown, duration time 302, a program title 303, detailed program description 304 and a cast 305 are registered in the program information on the basis of the program identifier 301. For example, the program identifier "1234," the duration time "01:00:00," the program title "World News," and the program description "Roundup of World affairs," and the cast "Ichiro Matsushita" are set in a row 306.

Fig. 4 shows an example of a program schedule. The program schedule is edited for each channel. For example, the program schedule shown in Fig. 4 is based on the channel identifier 1001 set in an entry 401, indicating the schedule related to the channel 1001. The program schedule lists, on the basis of the broadcast starting time and date and the program identifier as shown in a row 402, broadcast starting time of programs and program identifiers for all programs belonging to the channel. The programs are scheduled sequentially from the earliest broadcast starting time and date. For example, as the top entry of the program schedule, the start time "1999/12/02 06:00:00" and the program identifier "1234" are set.

The program schedule editing part 201 can register program information for two or more programs as shown in Fig. 3. The program schedule editing part 201 can also generate a program schedule for each channel to register in the program schedule all the programs contained in the program information. Registration of the program information in the program schedule is carried out by using the program identifier to associate each other.

Taking for instance Figs. 3 and 4, the program identifier "1234," the duration time "01:00:00," the program title "World News," the brief program description "News," the detailed program description "Roundup of World Affairs," and the cast "Ichiro Matsushita," contained in the program information, are associated with the start time "1999/12/02 06:00:00" and the program identifier "1234" on the program schedule.

The program schedule editing part 201 outputs the program schedules for all the channels and the program information on all the registered programs to the program guide information managing part 202.

The program guide information managing part 202 receives and manages the program schedules for all the channels and the program information on all the programs. Then the program guide information managing part 202 outputs the program schedules for all the channels and the program information on all the programs to the present-following event information generating part 20 periodically, or in response to a request from the present-following event information generating part 203. For example, the present-following event information generating part 203 may request the program guide information managing part 202 to acquire the program schedules and the program information once a day.

The present-following event information generating part 203 acquires the program schedules for all the channels and the program information on all the programs to generate a present-following event information schedule and single event information.

The program information and the program schedules to be forwarded from the program guide information managing part 202 to the present-following event information generating part 203 can be limited to a certain amount of data, for example, data for a week. In this case, the present-following event information generating part 203 generates a weekly (or seven-day) present-following event information transmission schedule.

Fig. 6 shows an example of a present-following event information transmission schedule. The program schedule guide information can be identified as the "present-following event information transmission schedule" as indicated in an entry "Type of Program Guide Information" 601. The present-following event information transmission schedule is generated for each channel. For example, the program schedule guide information of Fig. 6 is the program schedule guide information related to a channel 1001 as indicated in an entry 602. As shown in a row 603, the present-following event information transmission schedule lists present program identifiers corresponding to the present events and following program identifiers corresponding to the following events on the basis of the broadcast starting time and date sequentially from the earliest broadcast starting time and date. For example, as the top entry, the start time "1999/12/02 06:00:00," the present program identifier "1234" and the following program identifier "1435" are set in a row 604.

Fig. 7 shows an example of single event information. The program guide information can be identified as the "single event information" as indicated in an entry "Type of Program Guide Information" 701. The single event information describes information on a program to be broadcast on a channel; it contains information items such as a channel identifier 702, a program identifier 703, start time 704, duration time 705, a program title 706, program description 707 and a cast 708. In Fig. 7, the single event information sets "1001" for the channel identifier 702, "1234" for the program identifier, "1999/12/02 06:00:00" for the start time 704, "01:00:00" for the duration time 705, "World News" for the program title 706, "Roundup of World Affairs" for the detailed program description 707, and "Ichiro Matsushita" for the cast 708. The single event information is uniquely selected, based on the combination of the channel identifier 702 and the program identifier 703, from all the single event information.

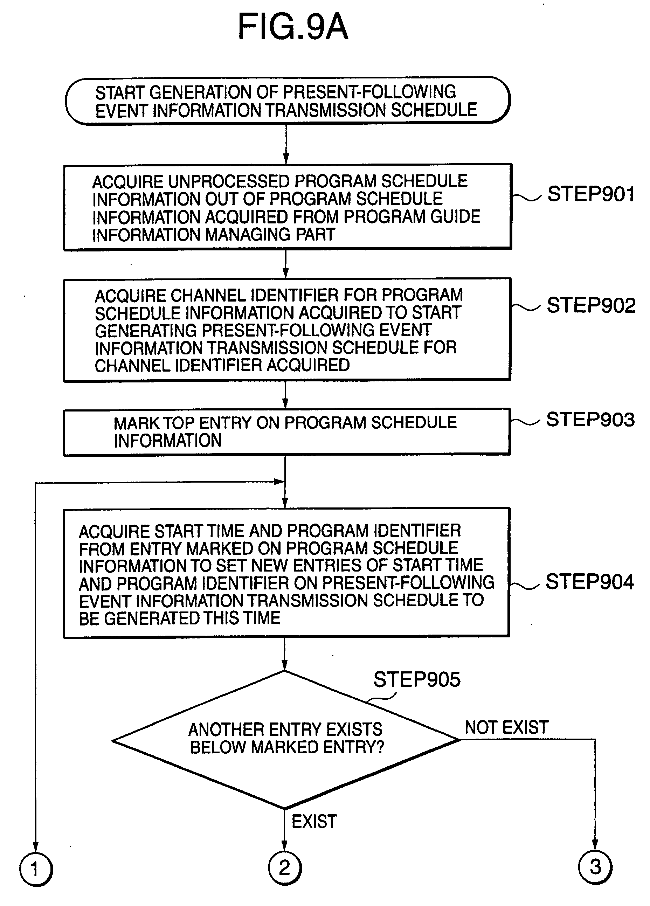

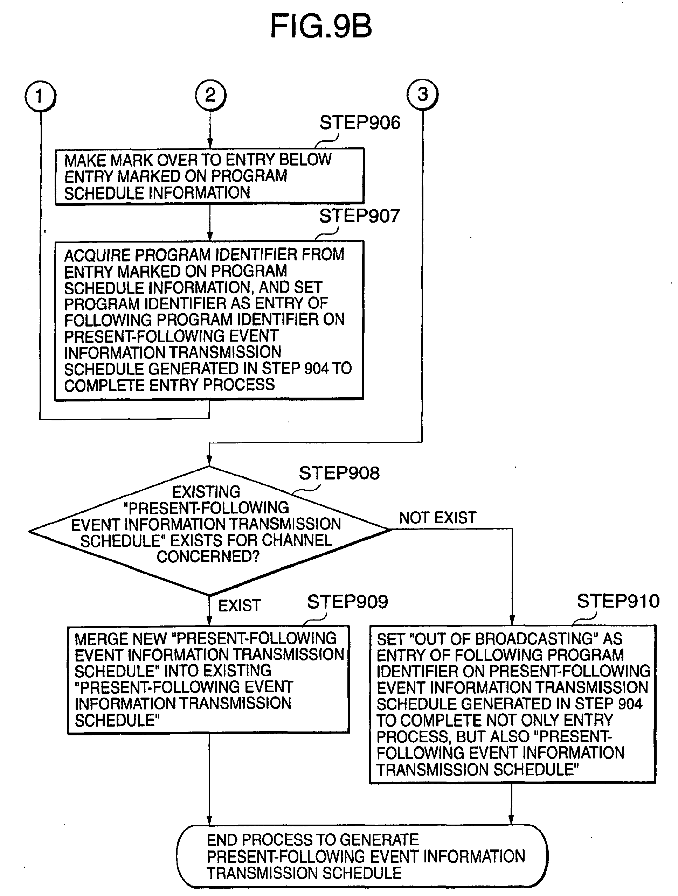

Referring next to Figs. 9A and 9B, it will be described how the present-following event information generating part 203 generates a present-following event information transmission schedule.

Step 901: The present-following event information generating part 203 acquires one of the program schedule information acquired from the program guide information managing part 202.

Step 902: A channel identifier is acquired from the program schedule information acquired.

Step 903: A new present-following event information transmission schedule is generated for the channel identifier acquired. For example, if the channel identifier "1001" is acquired from Fig. 4, the channel identifier "1001" is listed in the entry 602 of the program schedule guide information of Fig. 6.

Step 903: Next, the top entry is marked on the basis of the start time on the program schedule.

Step 904: Start time and a program identifier are acquired from the marked entry on the program schedule information to set them as new entries of the start time and the present program identifier on the "present-following event information transmission schedule" to be generated this time. At this time, the following program identifier is not set as a new entry.

Step 905: It is checked on the program schedule information whether any entry is registered below the marked entry. If an entry exists, the process step goes to step 906.

Step 906: the mark on the program schedule information is shifted to the entry below the marked entry.

Step 907: A program identifier is acquired from the entry to which the mark has been shifted on the program schedule information. Then the acquired program identifier is set in a new entry of the following program identifier on the present-following event information transmission schedule generated in step 904. Thus all the entries are complete.

If no entry exits in step 905, the process step goes to step 908.

Step 908: It is checked whether the existing "present-following event information transmission schedule" exists for the channel concerned. If the existing "present-following event information transmission schedule" exists for the channel concerned, the process step goes to step 909.

Step 909: the new "present-following event information transmission schedule" is merged into the existing "present-following event information transmission schedule" to end the process to generate the present-following event information transmission schedule for the program guide information acquired in step 901.

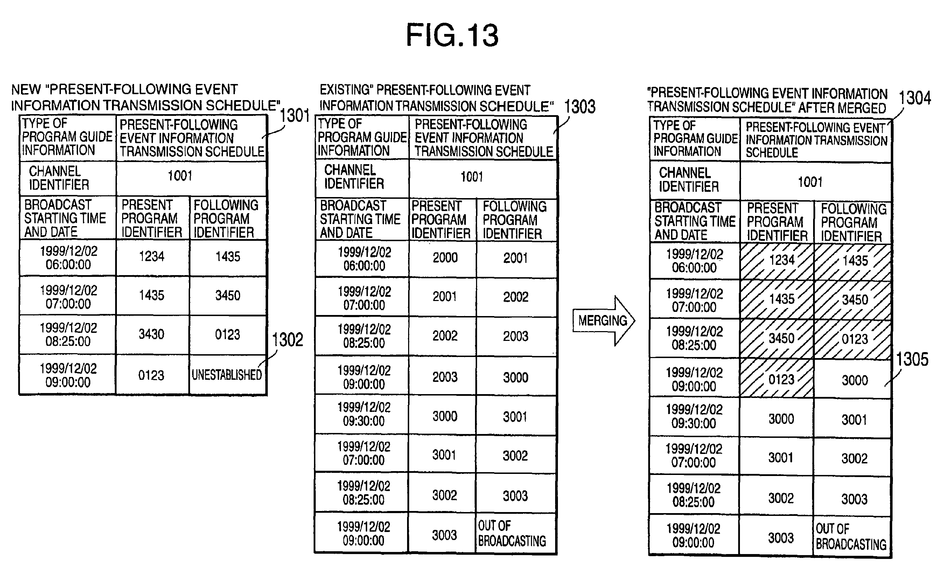

Merging is carried out, for example, as shown in Fig. 13. In this case, the last entry 1302, indicative of "unestablished," of the following event information on the new "present-following event information transmission schedule" 1301 takes the information on the existing "present-following event information transmission schedule" as shown in an entry 1305.

If it is checked in step 908 that the existing "present-following event information transmission schedule" does not exist for the channel concerned, the process step goes to step 910.

Step 910: "Out of Broadcasting" is set as the entry of the following program identifier on the "present-following event information transmission schedule" generated in step 904 to complete not only all the entries, but also the "present-following event information transmission schedule."

The present-following event information generating part 203 executes the operations from step 901 to step 907 for all the program schedules acquired from the program guide information managing part 202.

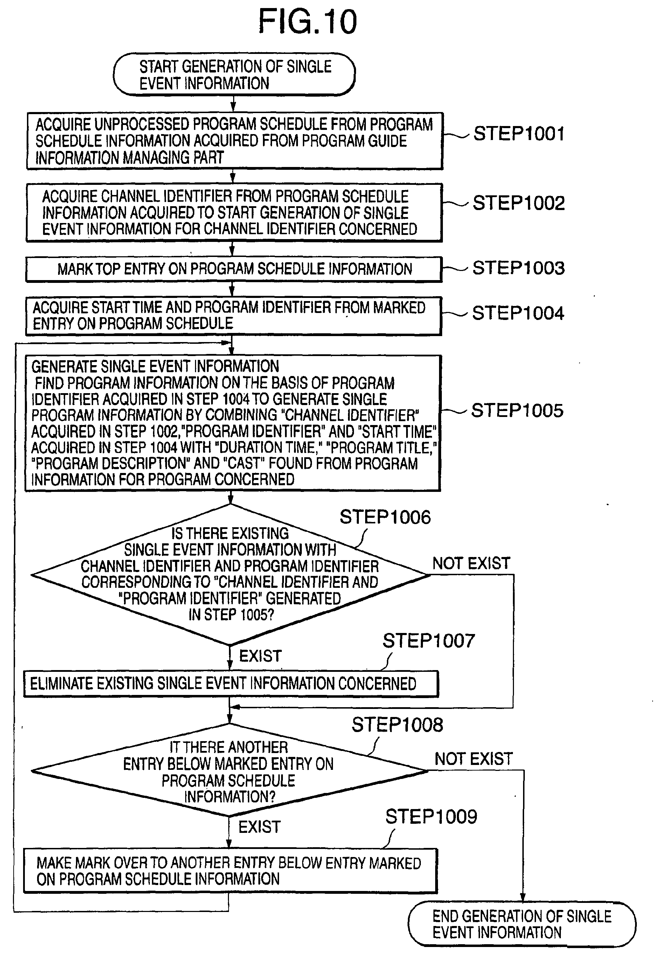

Referring next to Fig. 10, it will be described how the present-following event information generating part 203 generates single event information.

Step 1001: The present-following event information generating part 203 first acquires one of the program schedule information acquired from the program guide information managing part 202.

Step 1002: A channel identifier is acquired from the program schedule information acquired. Then new single event information is generated for the channel identifier acquired. For example, if the channel identifier "1001" in the entry 401 is acquired from Fig. 4, the channel identifier "1001" is listed in the entry 702 of the single event information of Fig. 7.

Step 1003: Next, the top entry is marked on the basis of the start time on the program schedule.

Step 1004: Start time and a program identifier are acquired from the marked entry.

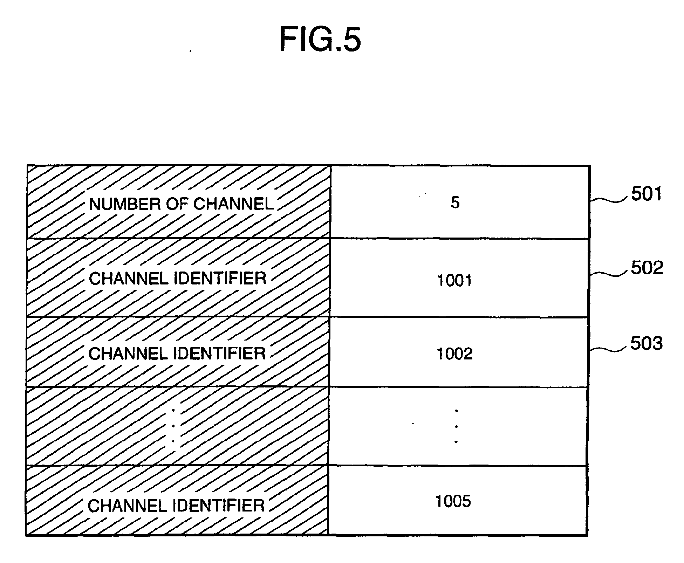

Step 1005: Program information is found on the basis of the program identifier acquired to generate single program information by combining the "channel identifier" acquired in step 1002 and the "program identifier" and the "start time" acquired in step 1004, with the "duration time," the "program title," the "program description," and the "cast" found from the program information for the program concerned. Suppose that the channel identifier "1001" in the entry 502 in Fig. 5, the program identifier "1234," the duration time "01:00:00," the program title "World News," the program description "Roundup of World Affairs," and the cast "Ichiro Matsushita" in the row of entries 306 in Fig. 3 are acquired. Suppose further that the start time "19999/12/02 06:00:00" in the entry 403 in Fig. 4 is acquired. These entries are combined to generate the single event information.

Step 1006: It is then checked whether the existing single event information held in the present-following event information generating part 203 contains single event information with a channel identifier and a program identifier corresponding to the "channel identifier" and the "program identifier" generated in step 1005. If there is corresponding single event information, the process step goes to step 1007.

Step 1007: The corresponding single event information in the existing single event information is eliminated.

If it is checked in step 1006 that there is no corresponding single event information or after completion of step 1007, the process step goes to step 1008.

Step 1008: It is checked whether there is any entry below the marked entry on the program schedule information. If an entry exists, the process step goes to step 1009.

Step 1009: The mark on the program schedule information is made over to the entry below the marked entry. Then the process step returns to step 1005, and the following operations are repeated.

If there is no corresponding entry in step 1008, the process to generate single event information for the program schedule information is ended.

The present-following event information generating part 203 executes the operations from step 1001 to step 1009 for all the program schedules acquired from the program guide information managing part 202.

Then the present-following event information generating part 203 forwards the program schedules and the program information acquired this time from the program guide information managing part 202 to the immediate update-capable single event information generating part 204.

The immediate update-capable single event information generating part 204 generates immediate update-capable single event information as soon as it receives all the data from the present-following event information generating part 203. The immediate update-capable single event information is single event information generated by combining a program identifier with a channel identifier other than the scheduled channel identifier, which allows the program to be broadcast on a channel other than the channel listed on the program schedule.

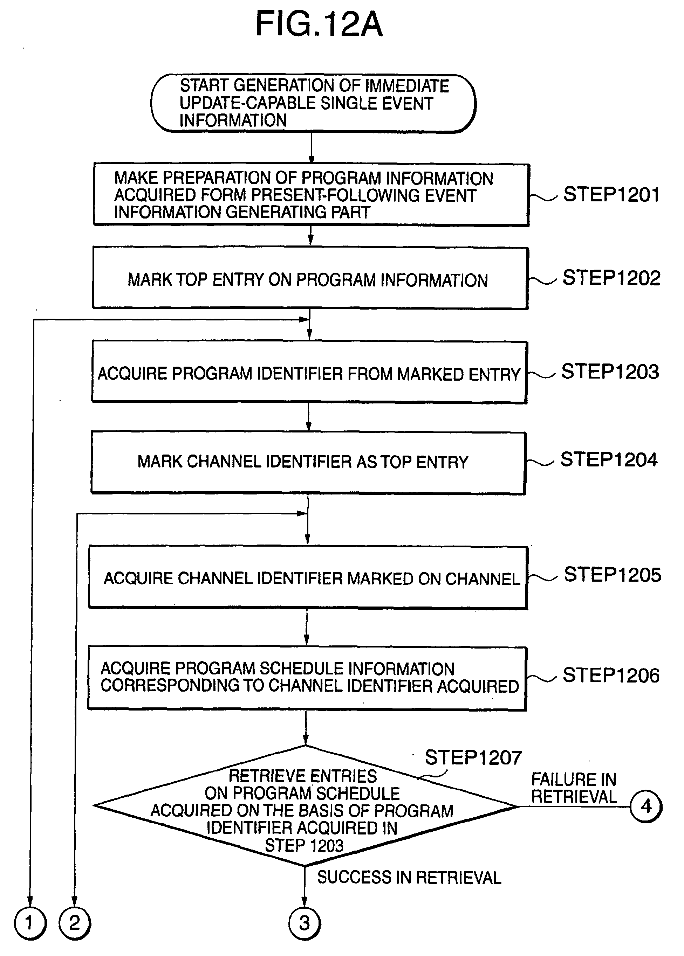

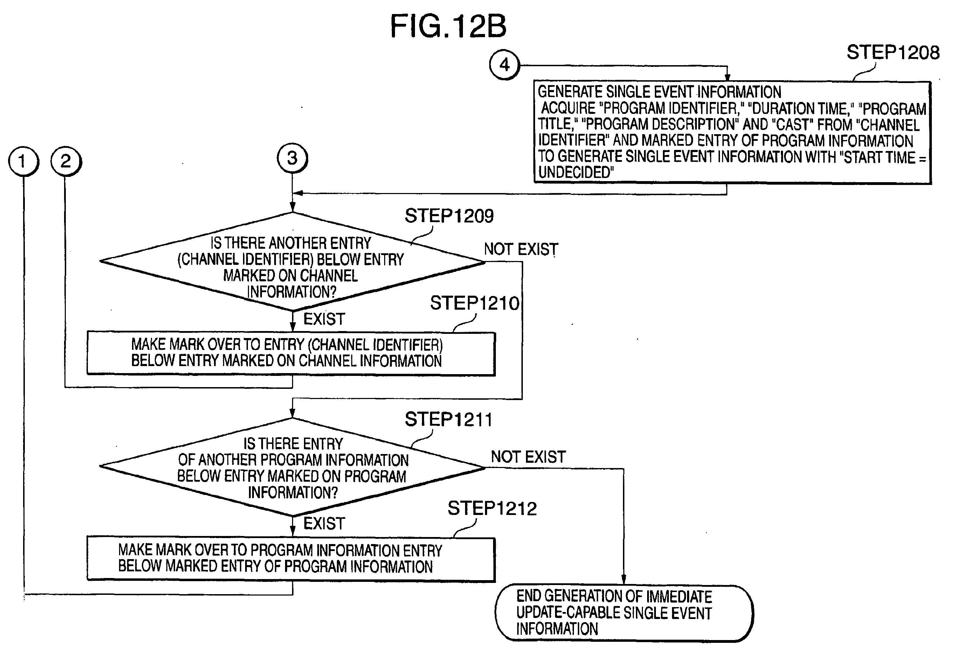

Referring to Figs. 12A and 12B, the process to generate the single event information will be described below.

Step 1201: The immediate update-capable single event information generating part 204 first makes the preparation of the program information acquired form the present-following event information generating part 203.

Step 1202: The top entry on the program information is then marked.

Step 1203: A program identifier is acquired on the basis of the marked entry.

Step 1204: Channel information is acquired for all the channels held beforehand in the immediate update-capable single event information generating part 204 as being handled in the program guide information generating and outputting system. Then the channel identifier in the top entry is marked. Fig. 5 shows an example of channel information. The channel information contains an entry "Number of Channel Identifier" indicating the number of channel identifiers listed on the channel information. The entry of the number of channel numbers is followed by the corresponding number of channel identifiers from the entry 502. The top entry 502 is marked.

Step 1205: The channel identifier in the marked entry is then acquired. For example, the channel identifier "1001" in the marked entry 502 is acquired.

Step 1206: Program schedule information corresponding to the channel identifier acquired in step 1205 is then acquired from all the program schedule information acquired from the present-following event information generating part 203.

Step 1207: Entries on the program schedule acquired are retrieved on the basis of the program identifier acquired in step 1203. If the retrieval is failed, that is, if the combination of the program identifier and the channel identifier is not listed on the program schedule, the process step goes to step 1208.

Step 1208: A "program identifier," "duration time," a "program title," "program description," and a "cast" are acquired or extracted from the marked entry. Then the "start time" is set as "undecided" to generate single event information by combining the same with the "channel identifier" acquired in step 1205. For example, the channel identifier "1002" in the entry 503 in Fig. 5, and the program identifier "1234," the duration time "01:00:00," the program title "World News," the program description "Roundup of World Affairs," and the cast "Ichiro Matsushita" in the entries in Fig. 5 are acquired to add the start time "undecided" to the above information acquired. Thus the single event information is generated.

If the retrieval is succeeded in step 1207, or after completion of step 1208, the process step goes to step 1209.

Step 1209: It is checked whether there is any entry of another channel identifier below the marked entry on the channel information: If there is the entry of another channel identifier, the process step goes to step 1210.

Step 1210: The mark is made over to the entry of another identifier. Then the process step returns to step 1205, and the following operations are repeated.

If there is no entry of another channel identifier in step 1209, the process step goes to step 1211.

Step 1211: It is checked whether there is any entry of another program information below the marked entry on the program information. If there is another entry, the process step goes to step S1212.

Step 1212: The mark is made over to the entry of another program information. Then, the process step returns to step 1203, and the following operations are repeated.

If there is no other entry in step 1211, the process to generate the immediate update-capable single event information is ended.

The immediate update-capable single event information generating part 204 forwards the immediate update-capable single event information generated from step 1201 to step 1212 to the present-following event information generating part 203.

Upon receipt of the single event information from the immediate update-capable single event information generating part 204, the present-following event information generating part 203 outputs, to the present-following event information outputting part 206, the immediate update-capable single event information together with the single event information and the present-following event information transmission schedule generated in the present-following event information generating part 203.

It should be noted that the present-following event information generating part 203 may limit the amount of data on the present-following event information transmission schedule to be output to the present-following event information outputting part 206. For example, the present-following event information transmission schedule for a certain days, for example, for three days, may be output to the present-following event information outputting part 206.

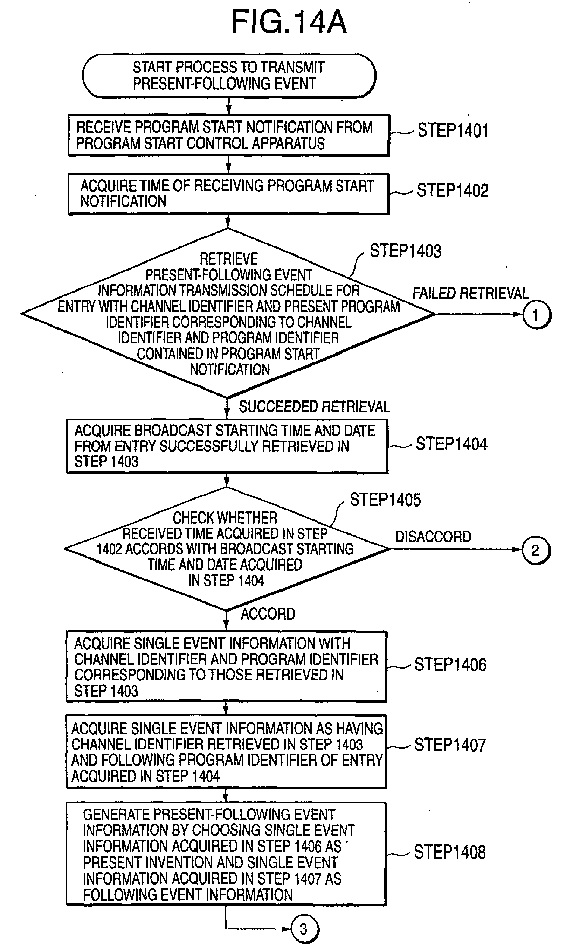

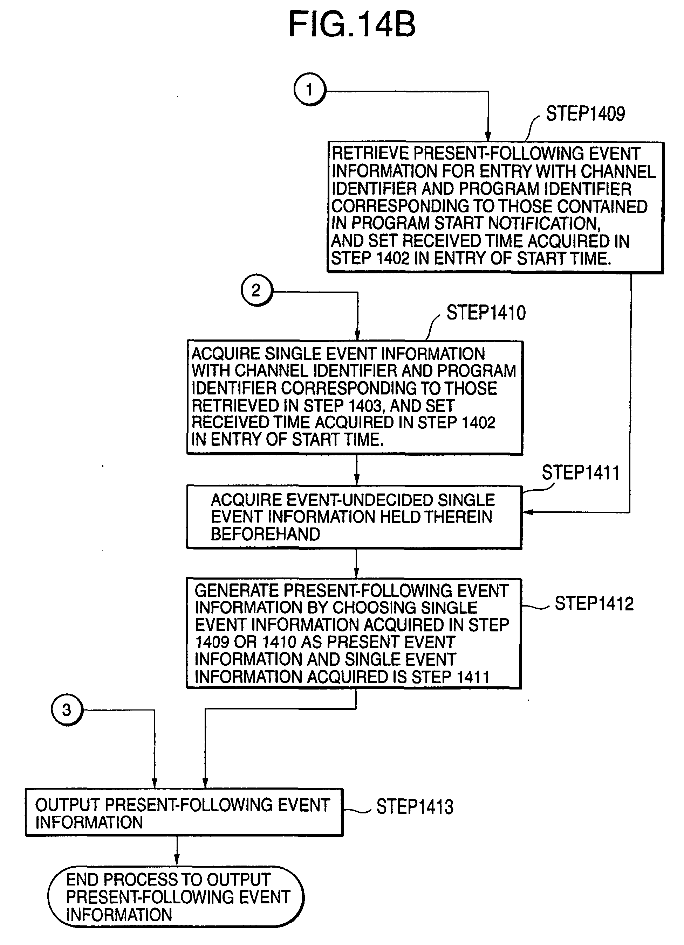

The present-following event information outputting part 206 acquires the above data and outputs the single event information in response to input of a program start notification from the program start controlling part 205. Referring next to Figs. 14A and 14B, it will be described how the present-following event information outputting part 206 outputs the present-following event information.

Step 1401: The present-following event information outputting part 206 acquires a program start notification from the program start controlling part 205. Fig. 11 shows an example of the program start notification. The program start notification consists of a channel identifier 1102 and a program identifier 1102. Thus it can be uniquely determined what program is started on what channel.

Step 1402: The present-following event information outputting part 206 then acquires the time of receiving the program start notification by means of an internal clock device.

Step 1403: The present-following event information transmission schedule is retrieved for an entry with a channel identifier and a present program identifier corresponding to the channel identifier and the program identifier contained in the program start notification acquired. If the retrieval is succeeded, the process step goes to step 1404.

Step 1404: Broadcast starting time and date is acquired from the entry successfully retrieved.

Step 1405: It is checked whether the received time acquired in step 1402 corresponds to the broadcast starting time and date acquired in step 1404. If they accord, the process step goes to step 1406.

Step 1406: Single event information with the channel identifier and the program identifier corresponding to those retrieved in step 1403 are acquired.

Step 1407: Then, single event information is acquired as having the channel identifier retrieved in step 1403 and a following program identifier of the entry acquired in step 1403.

Step 1408: Present-following event information is generated by choosing the single event information acquired in step 1406 as the present invention and the single event information acquired in step 1407 as the following event information.

Step 1413: The present-following event information generated is output.

If the retrieval in step 1403 is failed, the process step goes to step 1409.

Step 1409: The present-following event information outputting part 206 determines that the received program start notification is not on schedule described on the present-following event information transmission schedule acquired from the present-following event information generating part 203. The present-following event information outputting part 206 then retrieves immediate update-capable single event information with a channel identifier and a present program identifier corresponding to those contained in the program start notification to set the received time acquired in step 1402 as the unestablished start time of the single event information.

Step 1411: The present-following event information outputting part 206 also acquires event-undecided single event information (single event information for making all the entries undecided) held therein beforehand.

Step 1412: Present-following event information is generated by choosing the single event information acquired in step 1409 as the present event information and the single event information acquired in step 1411 as the following event information.

Step 1413: The present-following event information generated is output.

If it is determined in step 1405 that the received time disaccords with the broadcast starting time and date on the present-following event information transmission schedule, the process step goes to step 1410.

Step 1410: The present-following event information outputting part 206 determines that the received program start notification is not on schedule described on the present-following event information transmission schedule acquired from the present-following event information generating part 203. The present-following event information outputting part 206 then acquires single event information with a channel identifier and a program identifier corresponding to those retrieved in step 1403 to update the start time to the received time acquired in step 1402.

Step 1411: The present-following event information outputting part 206 acquires event-undecided single event information held therein beforehand.

Step 1412: Present-following event information is generated by choosing the single event information acquired in step 1410 as the present event information and the single event information acquired in step 1411 as the following event information.

Step 1413: The present-following event information generated is output.

After completion of step 1413, the process to output the present-following event information is ended.

Suppose that the program schedule editing part 201 alters the program schedule and the program information on a program on the air. Suppose further that the present-following event information generating part 203 updates the present-following event information transmission schedule to output the same to the present-following event information outputting part 206. In this case, the present-following event information outputting part 206 can immediately update the present-following event information according to the new present-following event information transmission schedule to output the updated present-following event information.

Fig. 15 shows an example of the present-following event information output from the present-following event information outputting part 206. The program guide information generating and outputting system and the associated receiver can refer to an entry 1501, indicative of "present-following event information," of the item "Type of Program Guide Information" to identify the information as the present-following event information. They can also refer to an entry 1503 of the channel identifier to specify a channel as the target. As a result, the entry 1503 describes the present event information that is followed by an entry 1504 of the following event information.

Suppose that it is determined in step 1405 that the start time of the single event information acquired disaccords with the received time of the program start notification acquired. In this case, the operations that follow step 1406 can be done as long as the time difference between the received time and the start time of the single event information is within a certain period of time calculated from the start time of the single event information, for example, within "start time - 1 sec. ≤ received time ≤ start time + two sec." Further, when the present-following event information outputting part 206 determines that the received program start notification is not on schedule described on the present-following event information transmission schedule acquired from the present-following event information generating part 203, the "duration time" of the present event information contained in the present-following event information can be also set as "time undecided."

As described above, this system assumes that any program information entry registered in the program information could be broadcast on all channels handled in the system. To allow for the assumption, the immediate update-capable single event information generating part 204 generates single event information for all the channels by making each program information entry have a different channel identifier to set the start time of the single event information as "not being set."

Upon receipt of the program start notification, if the single event information with the "unestablished" start time is used as the single event information with a channel identifier and a program identifier corresponding to those specified in the program start notification, the present-following event information outputting part 206 sets the received time of the program start notification for the start time.

Thus, even in such a situation that the program schedule editing part 201 cannot register information indicating that a program belongs to a channel, the program guide information can be output in quick response to the program start notification.

### (Second Embodiment)

A program guide information generating and outputting system according to the second embodiment is to output program guide information for event relay broadcasting in which a program on the air on a channel is shifted to another channel.

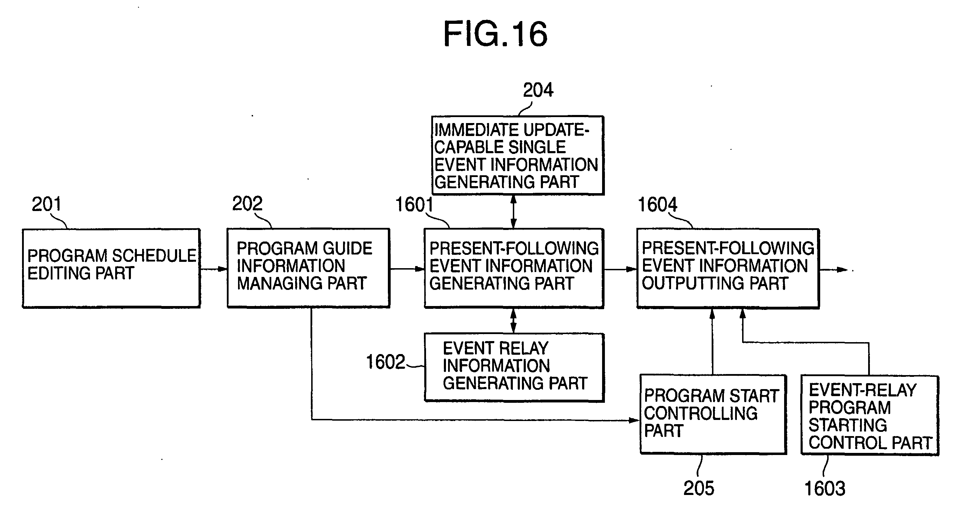

As shown in Fig. 16, the program guide information generating and outputting system includes an event relay information generating part 1602 and an event relay program starting control part 1603. The event relay information generating part 1602 generates event-relay single event information with a channel identifier and a program identifier registered on the program schedule to output the same to a present-following event information generating part 1601. The event relay program starting control part 1603 transmits, to a present-following event information outputting part 1604, an event relay notification as soon as event relay broadcasting is decided by an external trigger. The other structural parts are the same as those in the first embodiment (Fig. 1).

Description will be made next about the operation of the system. It should be noted here that the program schedule editing part 201, the program guide information managing part 202, the immediate update-capable single event information generating part 204 and the program start controlling part 205 operate the same way as those in the first embodiment.

The process to generate single event information and a present-following event information transmission schedule in the present-following event information generating part 1601, and the process to exchange information with the immediate update-capable single event information generating part 204 are also the same as those in the first embodiment.

The present-following event information generating part 1601 outputs single event information and outputs, to the event relay information generating part 1602, the single event information generated in the present-following event information generating part 1601 and the immediate update-capable single event information acquired from the immediate update-capable single event information generating part 204.

The event relay information generating part 1602 duplicates all the single event information acquired to set the event relay information in the duplicated single information.

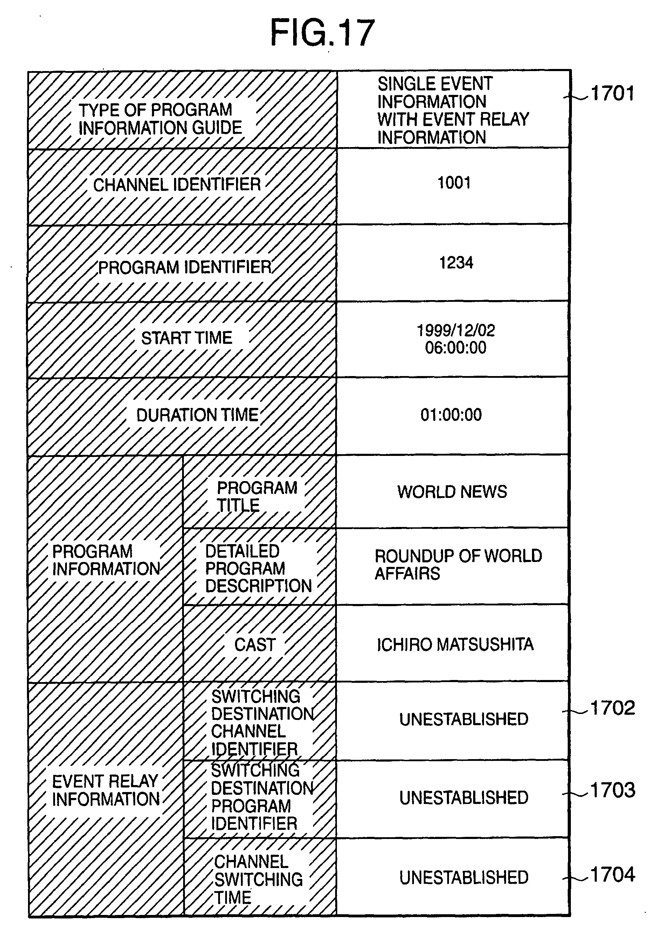

Fig. 17 shows an example of the single event information with event relay information set therein. The information is identified as the single event information with the event relay information by referring to an entry 1701, indicative of "single event information with event relay information," of an item "Type of Program Guide Information." Of all the entries of the single event information with the event relay information, for example, an entry 1702 describes a switching destination channel identifier upon which the program is shifted to the corresponding channel, while an entry 1703 describes a program identifier on the destination side. Further, if channel switching time is known, an entry 1704 will describe time at which the program is shifted to the corresponding channel. It should be noted that the event relay information generating part 1602 keeps the entry 1702 of "switching destination channel identifier", the entry 1703 of "switching destination program identifier" and the entry 1704 of "channel switching time" entry 1704 "unestablished."

The event relay information generating part 1602 outputs all the generated single event information with the event relay information to the present-following event information generating part 1601. The present-following event information generating part 1601 combines the single event information with the event relay information acquired from the event relay information generating part 1602, the immediate update-capable single event information acquired form the immediate update-capable single event information generating part 204, and the single event information and the present-following event information transmission schedule generated in the present-following event information generating part 1601. Then the present-following event information generating part 1601 outputs the combined information to the present-following event information outputting part 1604.

The present-following event information outputting part 1604 outputs the present-following event information in response to input of the program start notification from the program start controller part 205. This process is the same as that in the first embodiment.

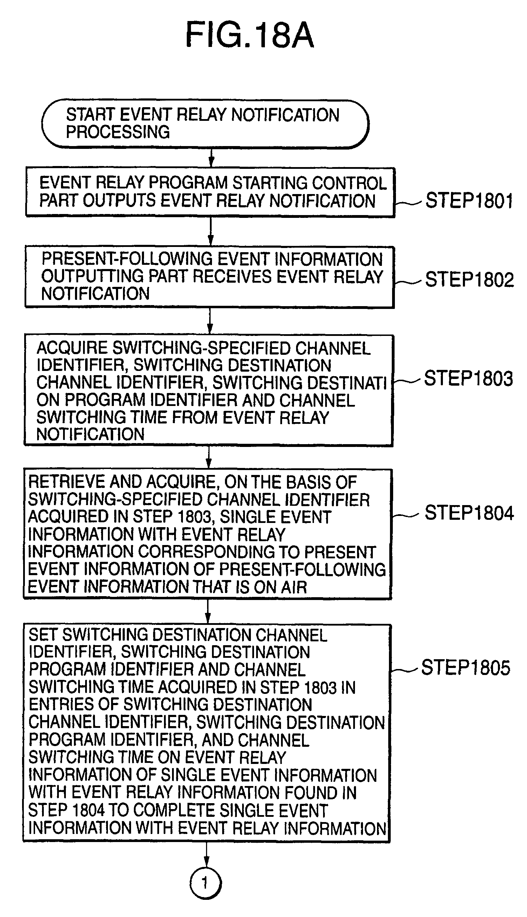

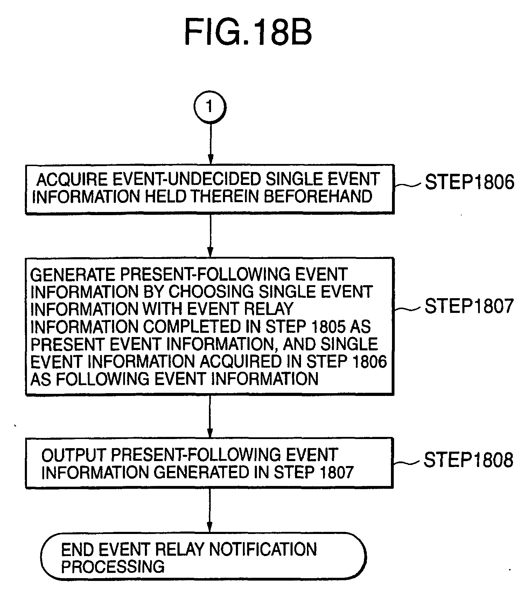

The present-following event information outputting part 1604 also outputs the present-following event information according to the event relay notification to be output from the event relay program starting control part 1603. The process steps will be described below with reference to Figs. 18A and 18B.

Step 1801: At first, it is decided by an external trigger, not shown, that a program on the air on a channel is shifted to another channel. Then an event relay notification is output from the event relay program starting control part 1603.

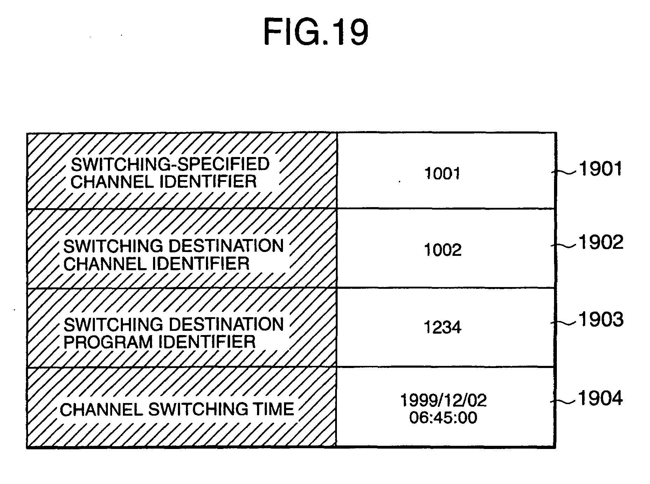

As shown in Fig. 19, the event relay notification consists of a switching-specified channel identifier 1901, a switching destination channel identifier 1902, a switching destination program identifier 1903, and channel switching time 1904. In Fig. 19, it is notified that a program on the air on a channel identifier 1001 is to be shifted on the time and data "1999/12/02 06:45:00" to a switching destination channel identifier 1002 as a switching destination program identifier 1234.

Step 1802: The present-following event information outputting part 1604 receives the event relay notification.

Step 1803: The present-following event information outputting part 1604 acquires the switching-specified channel identifier, the switching destination channel identifier, the switching destination program identifier and the channel switching time from the event relay notification.

Step 1804: present event information of the present-following event information on the air on the relayed channel identifier acquired is checked to retrieve and acquire single event information with event relay information corresponding to the present event information. For example, the present-following event information outputting part 1604, which has received an event relay notification as shown in Fig. 19, acquires single event information with event relay information as shown in Fig. 17.

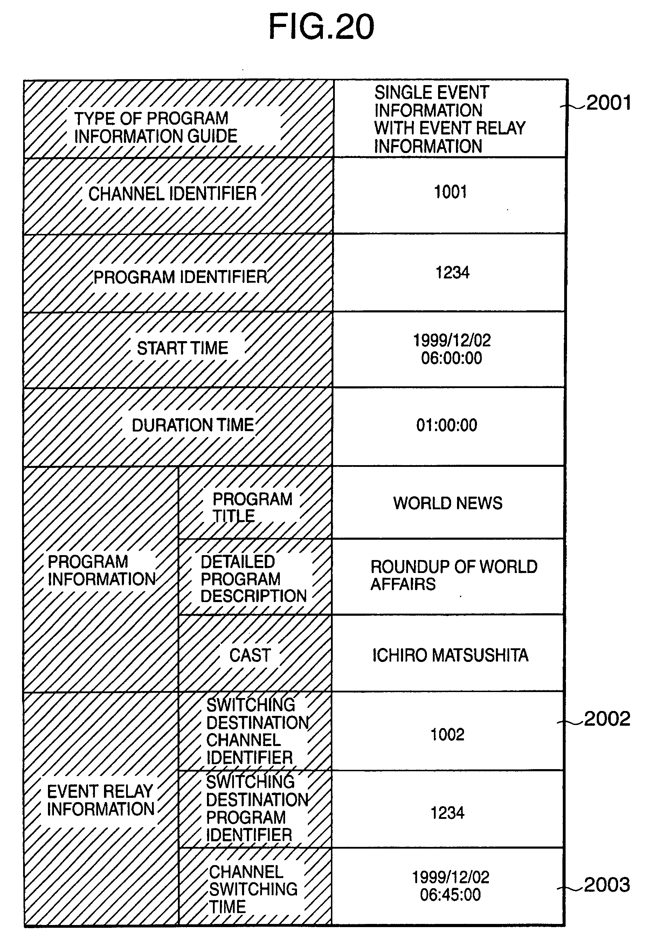

Step 1805: The switching destination channel identifier, the switching destination program identifier, the switching destination program identifier and the channel switching time acquired in step 1803 are put on the entries of the switching destination channel identifier, the switching destination program identifier and the channel switching time in the event relay information of the single event information with the event relay information to complete the single event information with the event relay information. For example, single event information with event relay information as shown in Fig. 20 is generated.

Step 1806: Next, the present-following event information outputting part 1604 acquires event-undecided single event information held therein beforehand.

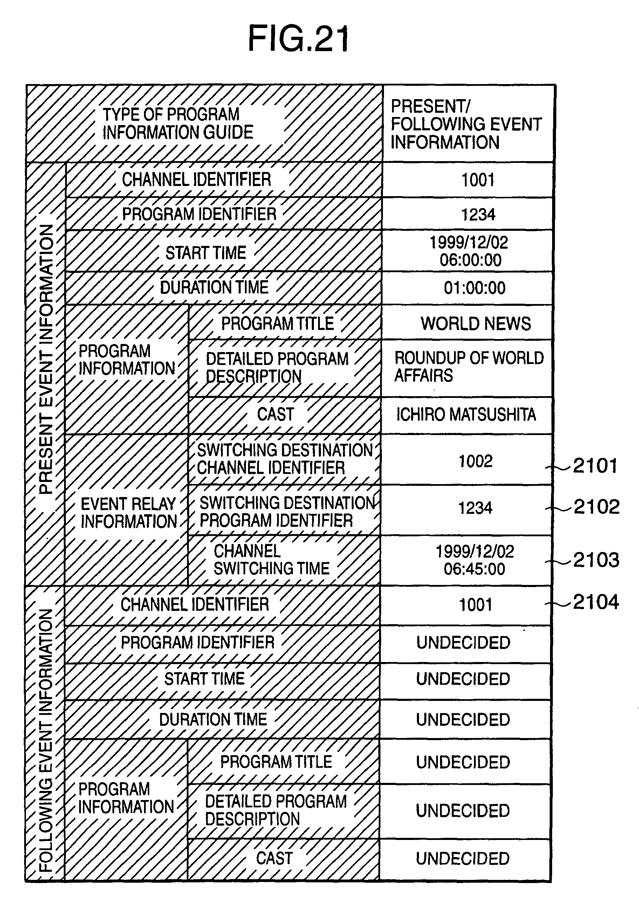

Step 1807: Then present-following event information is generated by choosing the single event information with the event relay information completed in step 1805 as the present event information, and the single event information acquired in step 1806 as the following event information. The present-following event information generated this time is, for example, as shown in Fig. 21.

Step 1808: Finally, the present-following event information outputting part 1604 stops outputting the present-following event information currently output to output the present-following event information generated in step 1807. After that, the process upon receiving the event relay notification is ended.

Thus the system can give response to the case where a program on the air on a channel is to be rushed to another channel. In other words, the system has only to output an event relay notification from the start control apparatus without scheduling of the program across channels in the program schedule editing part 201. In this configuration, the event relay information that informs the receiver of shifting the program on the air to another channel can be quickly output by putting it on the present-following event information currently output.

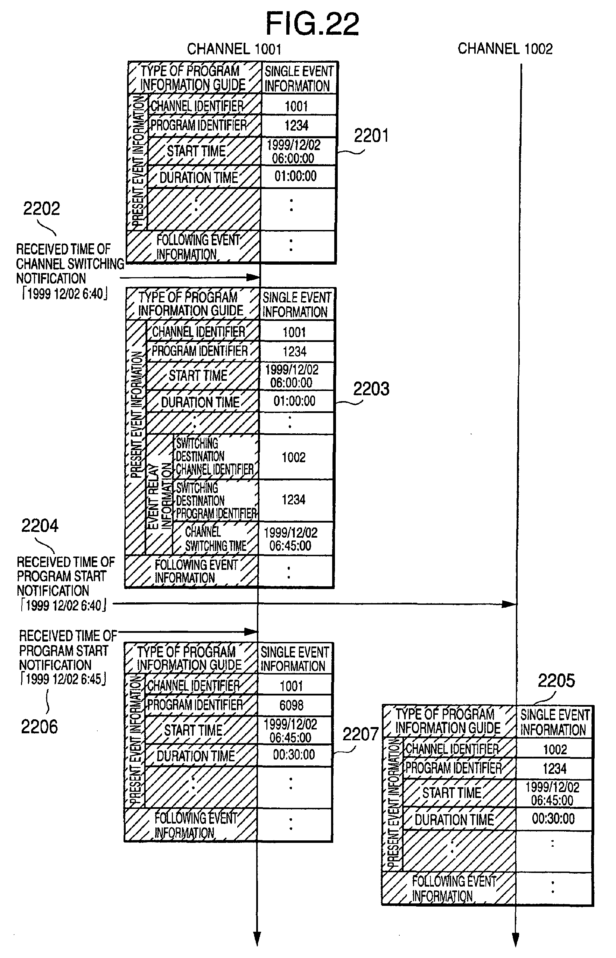

Suppose that, as shown in Fig. 22, the single event information related to the program identifier "1234" on the channel identifier "1001" is outputting as the present-following event information related to the present event on the channel concerned from the time "1999/12/02 6:00" (channel change notification 2201). Suppose further that the present-following event information outputting part 1604 receives the event relay notification as shown in Fig. 19 at the time "1999/12/02 6:40" (2202). Upon receipt of the event relay notification, the present-following event information outputting part 1604 executes the process steps shown in Figs. 18A and 18B to start outputting present-following event information with event relay information 2203 as the program guide information related to the present program on the channel identifier "1001."

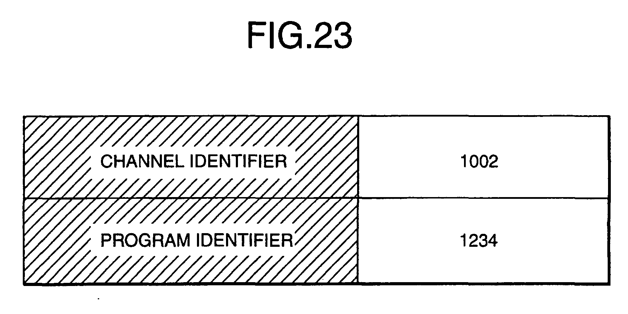

Then, the present-following event information outputting part 1604 receives a program start notification as shown in Fig. 23 at the time "1999/12/02 6:45" (2204). Upon receipt of the program start notification, the present-following event information outputting part 1604 executes the process steps shown in Figs. 14A and 14B to start outputting present-following event information 2205 as the program guide information related to the present program on the channel identifier "1002."

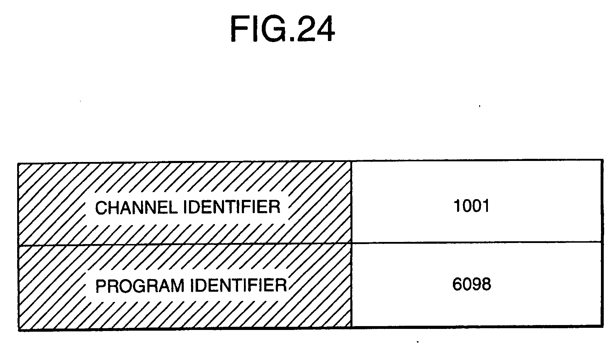

After that, the present-following event information outputting part 1604 receives a program start notification as shown in Fig. 24 at the time "1999/12/02 6:45" (2206). Upon receipt of the program start notification, the present-following event information outputting part 1604 executes the process steps shown in Figs. 14A and 14B to start outputting present-following event information 2207 as the program guide information related to the present program on the channel identifier "1001."

Thus the receiver that is recording the program on the air acquires the present-following event information with the event relay information, which allows the receiver to change the present channel to the channel to which link information is written at the channel switching time described in the event relay information contained in the present-following event information, thereby continuing recording of the program in progress.

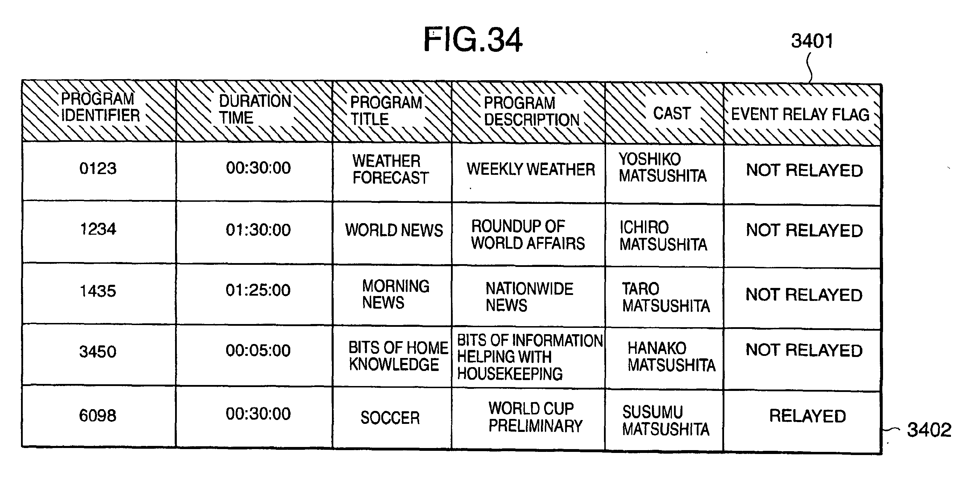

It should be noted that event relay flags 3401, for example, as shown in Fig. 34 may be provided for the program guide information to be generated in the program schedule editing part 201. In this case, if an entry or some entries of the event relay flags 3402 are made settable as "being relayed" for the program information corresponding to the program or programs to be subjected to the event relay, the event relay information generating part 1602 has only to generate single event information with the event relay information for only the program or programs with the event relay flag indicating that "there is a relay." This makes it possible to reduce the number of pieces of data on single event information with the event relay information to be generated.

Further, if holding a table of program identifiers to be subjected to event relay beforehand, the event relay information generating part 1602 has only to generate single event information with event relay information for only the single event information with the program identifiers concerned. This allows the event relay information generating part 1602 to quickly complete the generation of the single event information with event relay information as well as reduction in the number of pieces of data on the single event information with event relay information to be generated in the event relay information generating part 1602.

The event relay information contained in the single event information with event relay information needs switching destination channel and program identifiers as its information entries, but it does not necessarily contain channel switching time.

### (Third Embodiment)

A program guide information generating and outputting system according to the third embodiment generates single event information with event relay information and present-following event information in response to input of a program start notification.

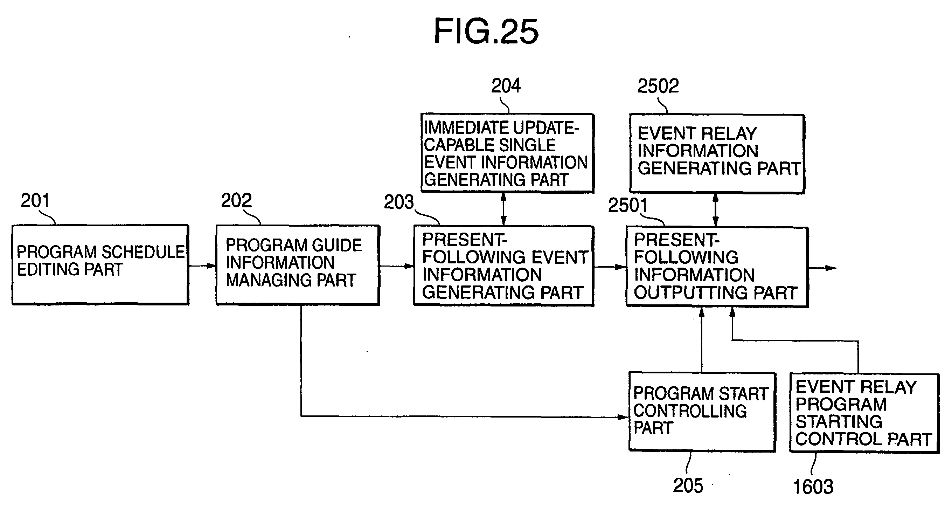

As shown in Fig. 25, this system includes an event relay program starting control part 1603 and an event relay information generating part 2502. The event relay program starting control part 1603 transmits an event relay notification when the operator decides on event relay broadcasting. The event relay information generating part 2502 acquires the event relay notification from a present-following event information outputting part 2501, generates single event information with event relay information, and outputs the generated single event information with event relay information to the present-following event information outputting part 2501. The other structural parts are the same as those in the first embodiment (Fig. 1).

That is, the program schedule editing part 201, the program guide information managing part 202, the immediate update-capable single event information generating part 204, the present-following event information generating part 203 and the program start controlling part 205 operate the same way as those in the first embodiment. Further, the event relay program stating control part 1603 operates the same way as that in the second embodiment.

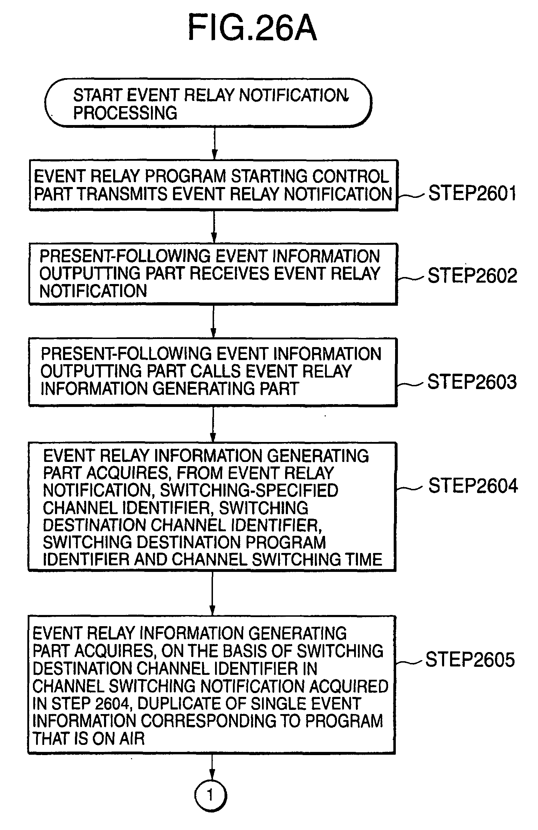

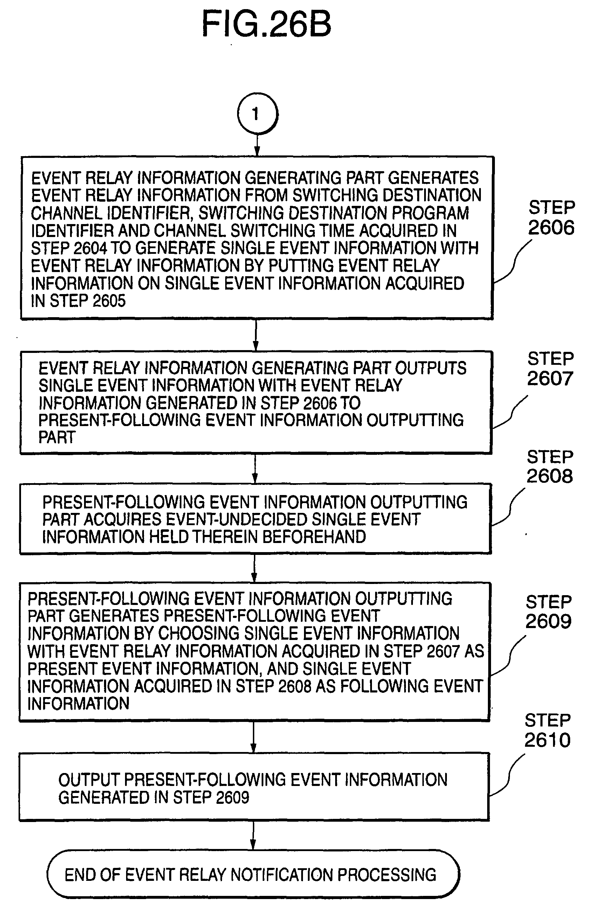

In this system, the present-following event information outputting part 2501 requests the event relay information generating part 2502 to generate single event information with event relay information in response to input of the event relay notification from the event relay program starting control part 1603. Then the present-following event information outputting part 2501 acquires the single event information with event relay information to output present present-following event information by putting the event relay information thereon. The process steps will be described with reference to Figs. 26A and 26B.

Step 2601: At first, when it is decided by an external trigger that a program on the air on a channel is to be shifted to another channel, the event relay program starting control part 1603 outputs an event relay notification.

Step 2602: The present-following event information outputting part 2501 receives the event relay notification.

Step 2603: The event relay information generating part 2502 is called.

Step 2604: The event relay information generating part 2502 acquires, from the event relay notification, a switching-specified channel identifier, a switching destination channel identifier, a switching destination program identifier and channel switching time.

Step 2605: A duplicate of the single event information on the program on the air is acquired on the basis of the switching-specified channel identifier acquired.

Step 2606: the event relay information generating part 2502 generates event relay information from the switching destination channel identifier, the switching destination program identifier and the channel switching time acquired in step 2604 to generate single event information with the event relay information by putting the event relay information on the single event information acquired in step 2605.

Step 2607: The single event information with the event relay information generated is output to the present-following event information outputting part 2501.

Step 2608: The present-following event information outputting part 2501 acquires event-undecided single event information held therein beforehand.

Step 2609: Present-following event information is generated by choosing the single event information with the event relay information generated as the present event information and the single event information acquired in step 2608 as the following event information.

Step 2610: The present-following event information generated is output and the process is ended.

Thus the program guide information generating and outputting system according to the embodiment is adaptable to a case where the system is required to give quick response to channel and program for event relay broadcasting even when single event information with event relay information for the channel and program concerned has not be generated beforehand. Further, there is no need to generate two or more pieces of data on single event information beforehand, which reduces the storage capacity used in the program guide information generating system.

### (Fourth Embodiment)

A program guide information generating and outputting system according to the fourth embodiment is to output present-following event information adapted to program interrupt broadcasting.

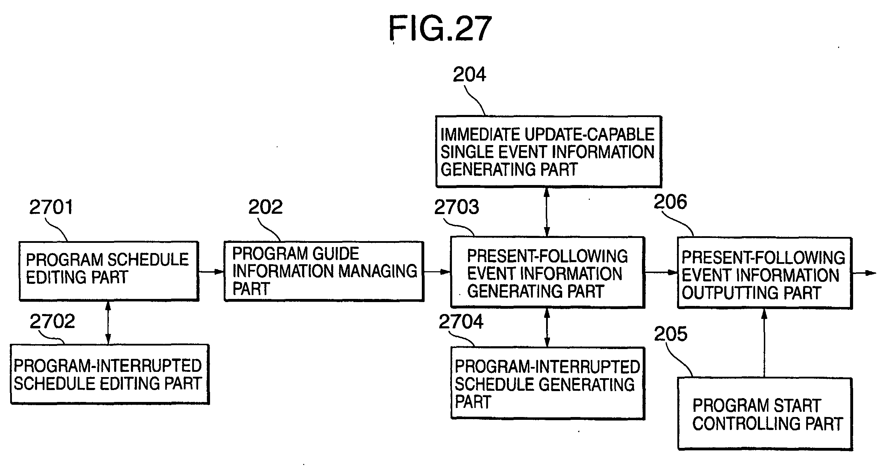

As shown in Fig. 27, the program guide information generating and outputting system includes a program-interrupted schedule registering part 2702 and a program-interrupted schedule generating part 2704. The program-interrupted schedule registering part 2702 generates a program-interrupted schedule to register the same in a program schedule editing part 2701. The program-interrupted schedule generating part 2704 generates a present-following event information transmission schedule by referring to a program-interrupted schedule when there exists the program-interrupted schedule in a program schedule received in a present-following event information generating part 2703. Then the program-interrupted schedule generating part 2704 outputs the present-following event information transmission schedule generated to the present-following event information generating part 2703. The other structural parts are the same as those in the first embodiment (Fig. 1).

The operator can edit a program schedule and program information for each channel in the program schedule editing part 2701. The operator can also edit and register the program-interrupted schedule in the program-interrupted schedule registering part 2702.

The program schedule editing part 2701 combines the program information and the program schedule edited in the program schedule editing part 2701 with the program-interrupted schedule edited in the program-interrupted schedule editing part 2702. Then the program schedule editing part 2701 outputs the combined schedule to the program guide information managing part 202.

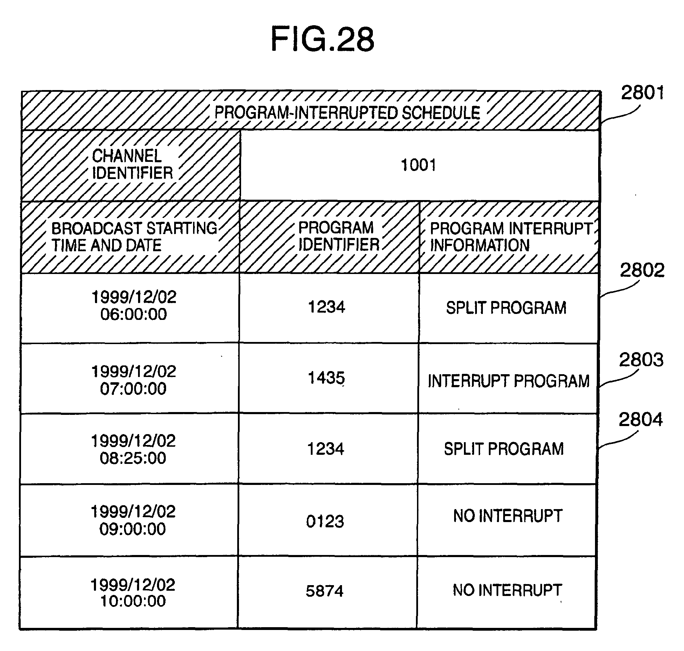

The program-interrupted schedule includes program interrupt information as shown in Fig. 28. The schedule can be identified by an entry 2801 as a "program-interrupted schedule." Each entry on the program schedule is given that from the program interrupt information.

For example, an entry 2802 of the program interrupt information describes a "split program," which indicates that an interrupt program (which may simply called a program) 2803 interrupts the program 2802 on the air and is broadcast instead. Therefore, an "interrupt program" is set in the entry of the program interrupt information on the program 2803. After the completion of broadcasting the program 2803, since the same program as the program 2802 is broadcast again, a "split program" is set in the entry of the program interrupt information on a program 2804 with the same program identifier as that of the program 2802.

Processing executed by the program guide information managing part 202, and processing executed by the present-following event information generating part 2703 for acquiring program information and the program schedule from the program guide information managing part 202 are the same as those in the first embodiment.

The present-following event information generating part 2703, which has acquired the program information and the program schedule from the program guide information managing part 202, generates single event information and a present-following event information transmission schedule. The process to generate the single event information and the present-following event information transmission schedule is the same as that in the first embodiment.

When acquiring a program-interrupted schedule from the program guide information managing part 202, the present-following event information generating part 2703 forwards the acquired program-interrupted schedule to the program-interrupted schedule generating part 2704.

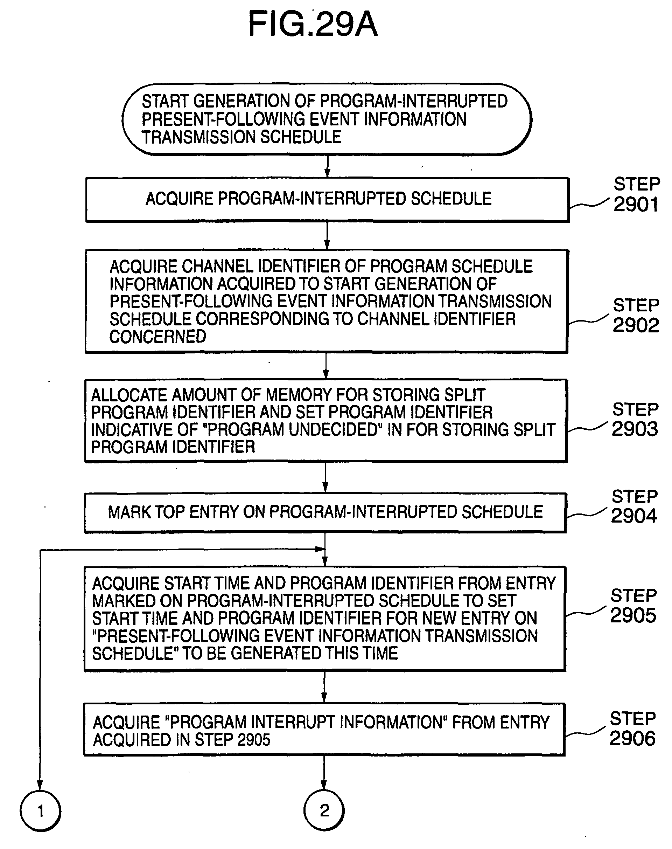

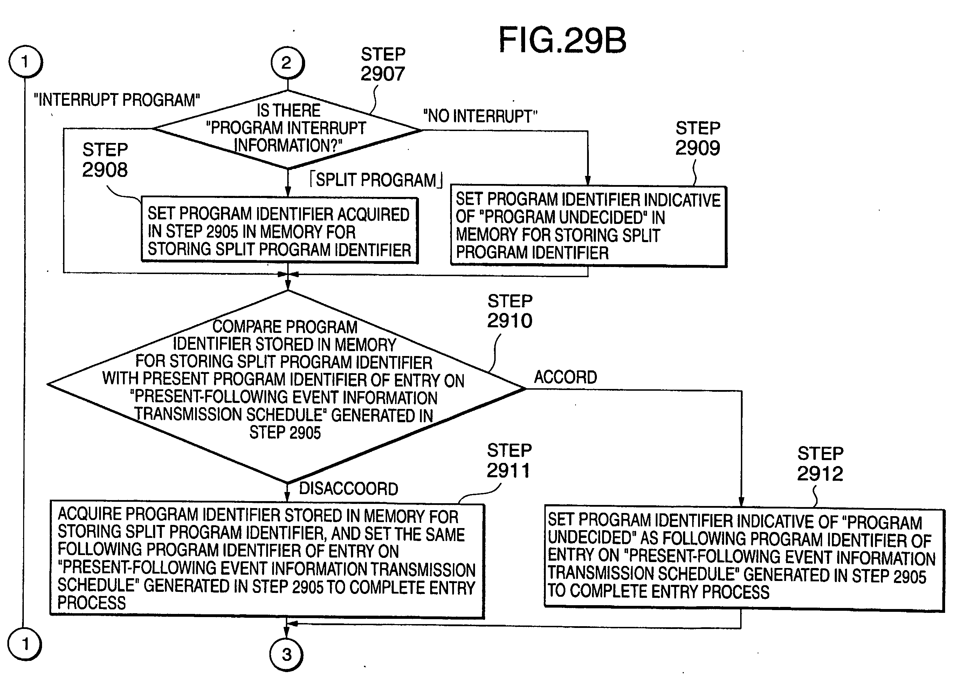

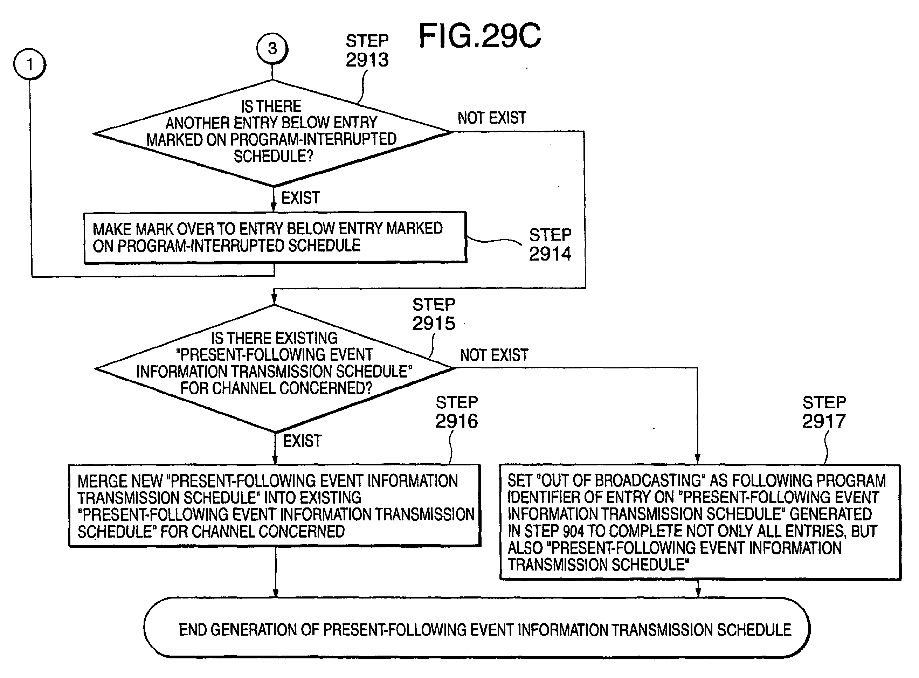

Upon acquiring the program-interrupted schedule, the program-interrupted schedule generating part 2704 generates a present-following event information transmission schedule. Figs. 29A, 29B and 29C shows processing procedures from the time the program-interrupted schedule generating part 2704 receives the program-interrupted schedule until it generates the present-following event information transmission schedule.

Step 2901: The program-interrupted schedule generating part 2704 acquires the program-interrupted schedule.

Step 2902: Then the program-interrupted schedule generating part 2704 acquires a channel identifier for the program-interrupted schedule to start generation of a present-following event information transmission schedule corresponding to the channel identifier concerned.

Step 2903: At first, The program interrupted schedule generating part 2704 allocates an amount of memory for storing a split program identifier in a memory area on the program-interrupted schedule generating part 2704. Then a program identifier indicative of "program undecided" is set in the memory for storing the split program identifier.

Step 2904: Next, the top entry is marked on the basis of the start time on the program-interrupted schedule.

Step 2905: A start time and a program identifier are acquired from the marked entry to set the start time and the program identifier for new entries on the "present-following event information transmission schedule" to be generated this time.

Step 2906: "Program interrupt information" is then acquired from the entries acquired in step 2905.

Step 2907: The contents of the "program interrupt information" acquired is checked.

Step 2908: If it is checked in step 2907 that the "program interrupt information" is the "split program," the program identifier acquired in step 2905 is set in the memory for storing the split program identifier.

Step 2909: If it is checked in step 2907 that the "program interrupt information" indicates "no interrupt," a program identifier indicative of "program undecided" is set in the memory for storing the split program identifier.

Step 2910: After completion of the process step 2908 or 2909, the program identifier stored in the memory for storing the split program identifier is compared with the present program identifier of the entry on the "present-following event information transmission schedule" generated in step 2905.

If both program identifiers disaccord (that is, if "program interrupt information = no interrupt), the process step goes to step 2911.

Step 2911: The program identifier stored in the memory for storing the split program identifier is acquired and set in the entry of the following program identifier on the "present-following event information transmission schedule" generated in step 2905 to complete the entry process.

As a result of comparison in step 2910, if it is found that both program identifiers accord (that is, if "program interrupt information = split program"), the process step goes to step 2912.

Step 2912: the program identifier indicative of "program undecided" is set in the entry of the following program identifier on the "present-following event information transmission schedule" generated in step 2905 to complete the entry process.

If it is found in step 2907 that "program interrupt information = interrupt program," the process step goes to step 2910.

Step 2910: The program identifier stored in the memory for storing the split program identifier is compared with the present program identifier of the entry on the "present-following event information transmission schedule" generated in step 2905.

If both program identifiers disaccord, the process step goes to step 2911.

Step 2911: The program identifier stored in the memory for storing the split program identifier is acquired and set in the entry of the following program identifier on the "present-following event information transmission schedule" generated in step 2905 to complete the entry process.

In other words, if there is an entry of "program interrupt information = split program" before the entry concerned on the program-interrupted schedule, since the program identifier for the split program is stored in the memory for storing the split program identifier, the program identifier indicative of the split program is set in the entry of the following program identifier on the "present-following event information transmission schedule" on which the interrupt program is set as the present program identifier.

Step 2913: The program-interrupted schedule generating part 2704 checks whether there exists another entry below the entry marked on the program-interrupted schedule. If another entry exists, the process step goes to step 2914.

Step 2914: The mark is made over to the entry below the marked entry on the program-interrupted schedule. Then the process step returns to step 2905, and the following operations are repeated.

If it is checked in step 2913 that there is no entry, the process step goes to step 2915.

Step 2915: It is checked whether there is an existing "present-following event information transmission schedule" for the channel concerned in the present-following event information generating part 2703. The following process steps are the same as the process steps 908 to 910 in the first embodiment. In other words, if an existing "present-following event information transmission schedule" exists, the "present-following event information transmission schedule" generated is merged into the existing one. If not exist, "out of broadcasting" is set in the entry of the following program identifier on the "present-following event information transmission schedule" generated to complete the "present-following event information transmission schedule."

The program-interrupted schedule generating part 2704 outputs, to the present-following event information generating part 2703, the present-following event information thus generated.

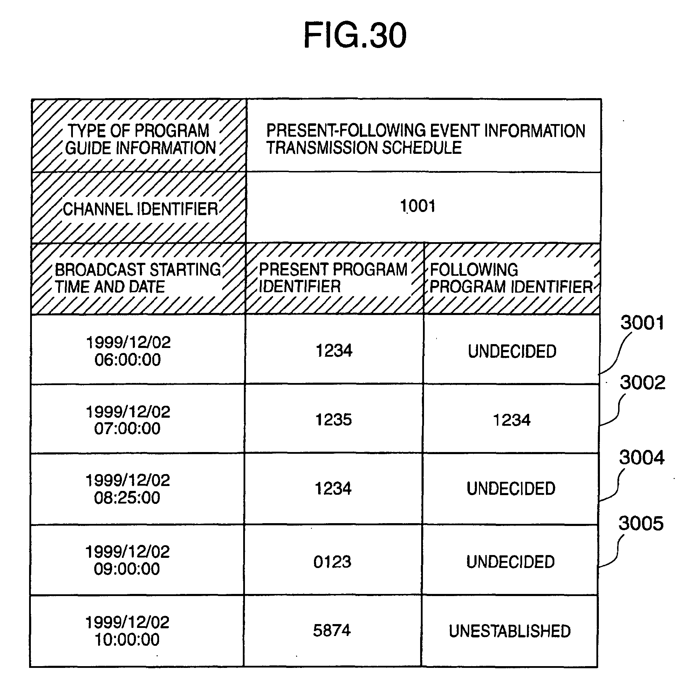

Next, description will be made about the present-following event information transmission schedule generated in the program-interrupted schedule generating part 2704 with reference to Fig. 30. In Fig. 30, an entry 3001 is an entry corresponding to the entry 2802 containing information indicative of "program interrupt information = split program" as shown in Fig. 28. A program identifier indicative of "undecided" is set in the entry 3001 as the following program identifier. An entry 3002 is an entry corresponding to the entry 2803 containing information indicative of "program interrupt information = interrupt program" as shown in Fig. 28. The program identifier "1234" corresponding to the entry 2802 of the split program is put in the entry 3002 as the following program identifier to put the single event information corresponding to the split program in the following event information of the present-following event information with which the program is being interrupted.

The present-following event information generating part 2703 outputs, to the present-following event information outputting part 206, the program information and the present-following event information transmission schedule generated in the present-following event information generating part 2703, the immediate update-capable single event information generating part 204 and the program-interrupted schedule generating part 2704.

Processing executed by the present-following event information outputting part 206 is the same as that in the first embodiment.

Thus the program-interrupted schedule generating part 2704 generates the present-following event information transmission schedule corresponding to the program-interrupted schedule registered in the program-interrupted schedule registering part 2702. The present-following event information is output according to the present-following event information transmission schedule. This makes possible quick output of the present-following event information adapted to program interrupt broadcasting.

The receiver, which has acquired the present-following event information during program interrupt broadcasting, can perform proper recording of the split program without recording the interrupt program.

### (Fifth Embodiment)

The fourth embodiment attains output of present-following event information adapted to program interrupt broadcasting according to the program-interrupted schedule, which is generated beforehand in the program-interrupted schedule registering part 2702. On the other hand, the fifth embodiment describes a program guide information generating and outputting system that outputs present-following event information adapted to program interrupt broadcasting in a case no program-interrupted schedule can be registered beforehand.

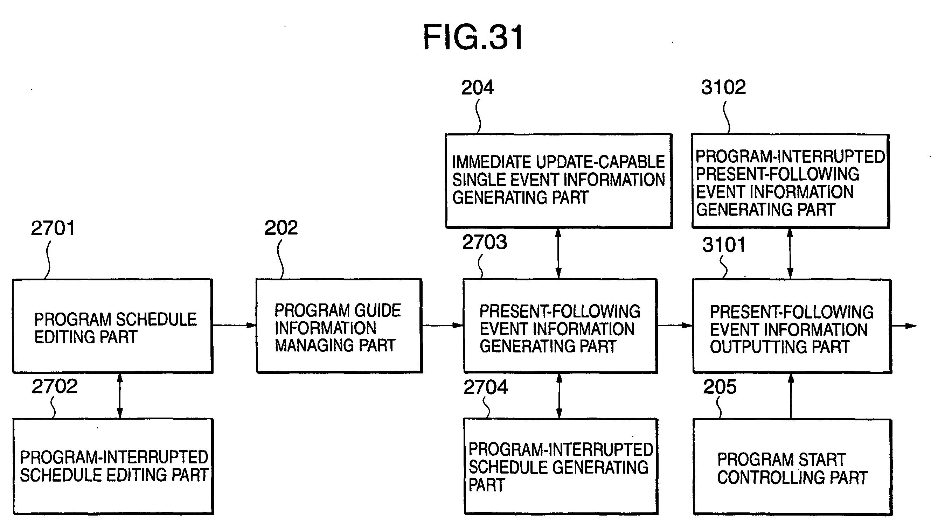

As shown in Fig. 31, this system includes a program-interrupted present-following event information generating part 3102. The program-interrupted present-following event information generating part 3102 is called when a present-following event information outputting part 3101 has acquired a program start notification that does not follow the present-following event information transmission schedule, to generate present-following event information. Then the program-interrupted present-following event information generating part 3102 outputs the generated present-following event information to the present-following event information outputting part 3101.

The other structural parts are the same as in the fourth embodiment (Fig. 27).

Further, the program schedule editing part 2701, the program-interrupted schedule registering part 2702, the program guide information managing part 202, the present-following event information generating part 2703, the program-interrupted schedule generating part 2704, the immediate update-capable single event information generating part 204 and the program start controlling part 205 operate the same way as those in the fourth embodiment. Furthermore, processing executed by the present-following event information outputting part 3101 for acquiring program information and a present-following event information transmission schedule from the present-following event information generating part 2703, and processing upon acquiring the program information and the present-following event information transmission schedule are the same as those executed by the present-following event information outputting part 206 in the first embodiment.

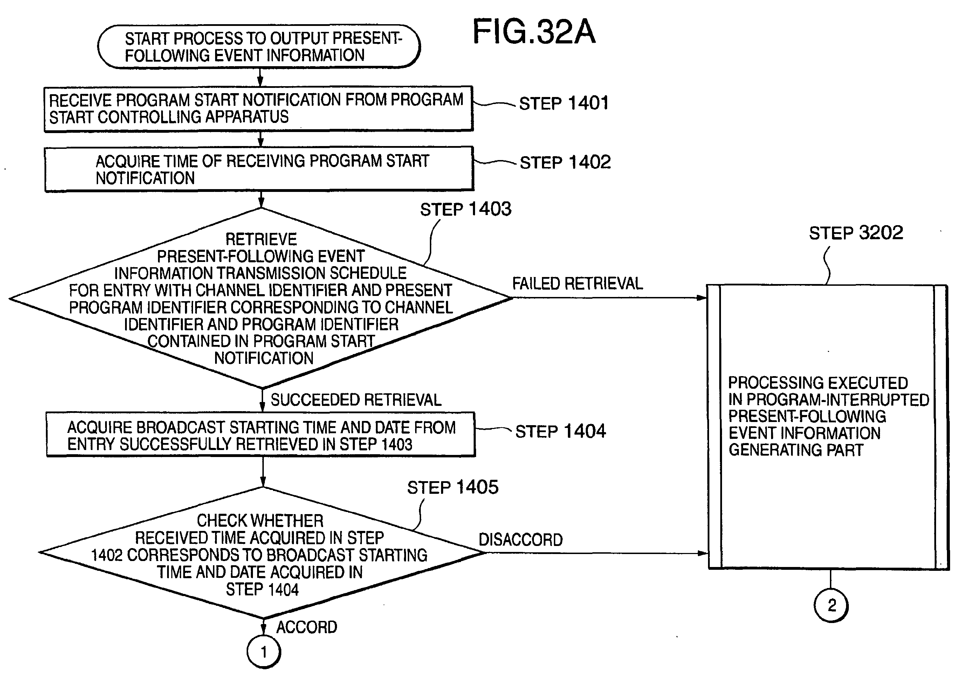

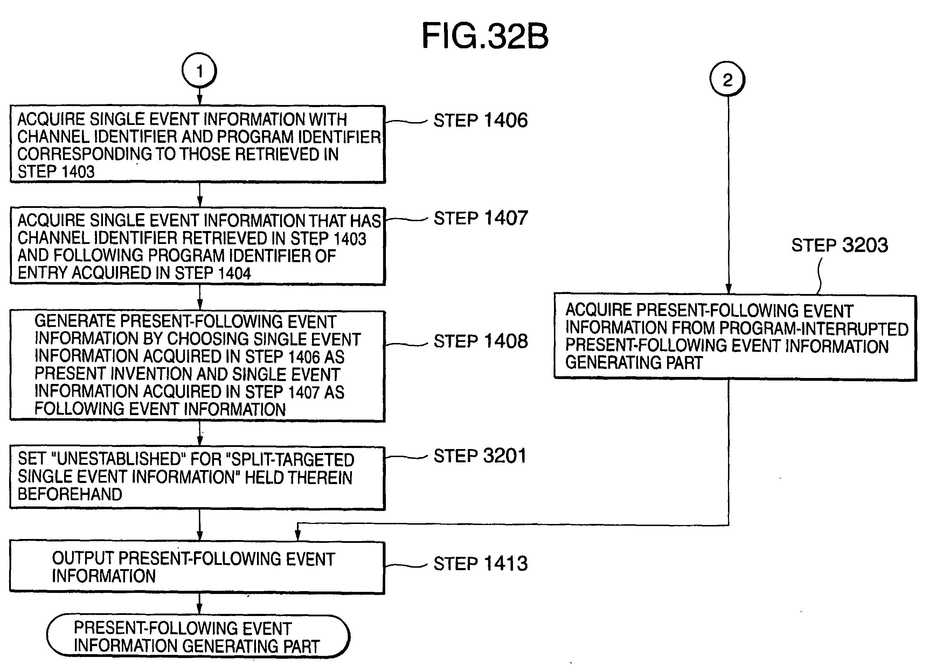

Figs. 32A and 32B shows the process to output present-following event information from the present-following event information outputting part 3101 in response to input of a program start notification.

Step 1401: The present-following event information outputting part 3101 acquires the program start notification from the program start controlling part 205.

Step 1402: The present-following event information outputting part 3101 then acquires the time of receiving the program start notification by means of an internal clock device. As shown in Fig. 11, the program start notification consists of a channel identifier and a program identifier, which makes it possible to uniquely determine what program is started on what channel.

Step 1403: The present-following event information transmission schedule is retrieved for an entry with a channel identifier and a present program identifier corresponding to the channel identifier and the program identifier contained in the program start notification acquired in step 1401. If the retrieval is succeeded, the process step goes to step 1404.

Step 1404: Broadcast starting time and date is acquired from the entry successfully retrieved.

Step 1405: It is checked whether the received time acquired in step 1402 corresponds to the broadcast starting time and date acquired in step 1404.

Step 1406: If it is checked in step 1405 that they accord, single event information with the channel identifier and the program identifier corresponding to those retrieved in step 1403 are acquired.

Step 1407: Then, single event information is acquired as having the channel identifier retrieved in step 1403 and the following program identifier of the entry acquired in step 1404.

Step 1408: Present-following event information is generated by choosing the single event information acquired in step 1406 as the present invention and the single event information acquired in step 1407 as the following event information.

Step 3201: The present-following event information outputting part 3101, which has generated the present-following event information, sets "unestablished" in the entry of "split-targeted single event information" held therein beforehand. The split-targeted single event information is information to be used, as described later, in a case where there exists a split program that is not contained in the present-following event information transmission schedule (therefore, this information is not used here). The split-targeted single event information is always managed in the present-following event information outputting part 3101 during system operation. For example, when the system is activated, the entry of the "split-targeted single event information" is set as "unestablished" so that it is accessible.

Step 1413: The present-following event information outputting part 3101 stops outputting the present-following event information currently output to output the present-following event information generated in step 1408. After that, the process to output present-following event information is ended.

If the retrieval in step 1403 is failed, the process step goes to step 3202.

Step 3202: The present-following event information outputting part 3101 calls the program-interrupted present-following event information generating part 3102 to forward thereto the program start notification acquired in step 1401, the single event information, the split-targeted single event information, and the present-following event information currently output from the present-following event information outputting part 3101.

The program-interrupted present-following event information generating part 3102 generates new present-following event information, as described later, by putting, on the entry of the following event information, the present event information of the present-following event information currently output.

Step 3203: The present-following event information outputting part 3101 acquires the present-following event information generated by the program-interrupted present-following event information generating part 3102.

Step 1413: The present-following event information outputting part 3101 stops outputting the present-following event information currently output to output the present-following event information acquired in step 3203. After that, the process to output present-following event information is ended.

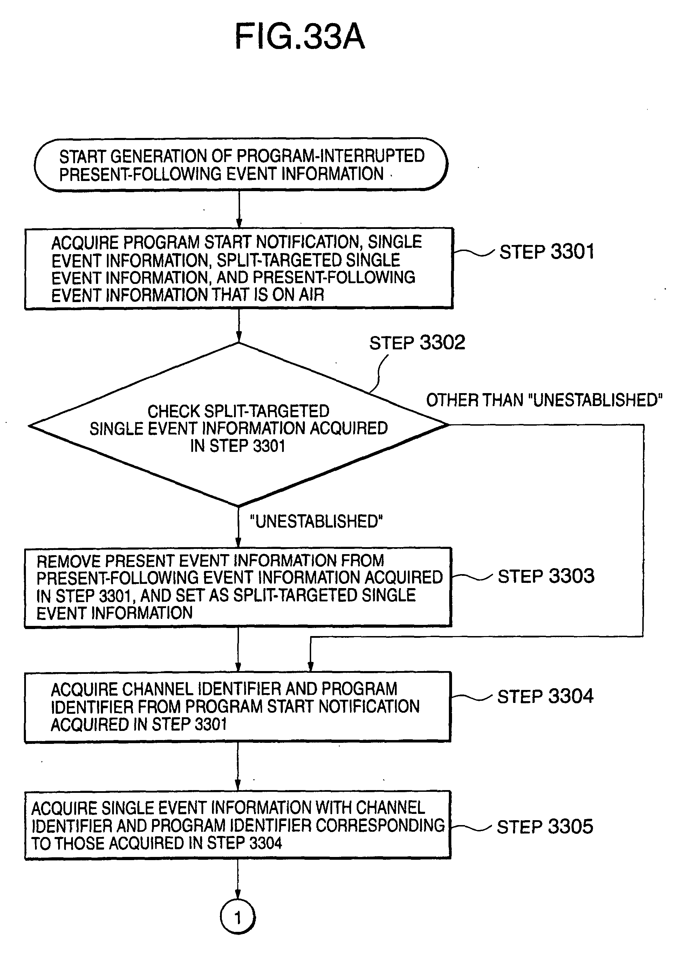

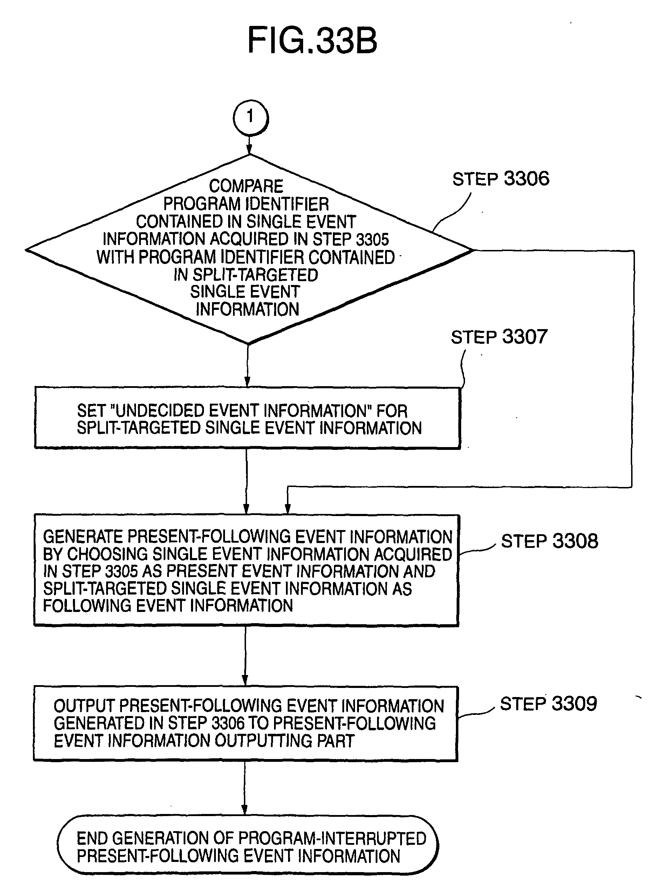

Referring next to Figs. 33A and 33B, description will be made about the process to generate present-following event information (in step 3202) in the program-interrupted present-following event information generating part 3102.

Step 3301: The program-interrupted present-following event information generating part 3102 first acquires, from the present-following event information outputting part 3101, the program start notification, the single event information, the split-targeted single event information, and the present-following event information currently output.

Step 3302: Then the program-interrupted present-following event information generating part 3102 checks the split-targeted single event information acquired. If the split-targeted single event information is "unestablished," the process step goes to step 3303.

Step 3303: The present event information is removed from the present-following event information acquired in step 3301, and set in the entry of split-targeted single event information. For example, if the present-following event information acquired in the program-interrupted present-following event information generating part 3102 is information as shown in Fig. 21, single event information, related to the present event information, with the channel identifier "1001" and the program identifier "1234" is removed from the present-following event information, and set in the entry of the split-targeted single event information.

Step 3304: After completion of step 3303 or when the split-targeted single event information describes something except when it is "unestablished," the program-interrupted present-following event information generating part 3102 acquires a channel identifier and a program identifier from the program start notification acquired in step 3301.

Step 3305: Then the program-interrupted present-following event information generating part 3102 acquires single event information with the channel identifier and the program identifier acquired.

Step 3306: Next, the program identifier contained in the single event information acquired in step 3305 is compared with the program identifier contained in the split-targeted single event information.

If both program identifiers accord, the process step goes to step 3307.

Step 3307: The split-targeted single event information is set as "undecided event information" indicating that the contents of the program are undecided.

Step 3308: After completion of step 3307 or if both program identifiers disaccord as a result of comparison in step 3306, the program-interrupted present-following event information generating part 3102 generates present-following event information by choosing the single event information acquired in step 3305 as the present event information and the split-targeted single event information as the following event information.

Step 3309: Finally, the program-interrupted present-following event information generating part 3102 outputs the generated present-following event information to the present-following event information outputting part 3101 to end the process to generate present-following event information.

Thus, when the present-following event information outputting part 3101 receives a program start notification that does not follow the present-following event information transmission schedule, the program-interrupted present-following event information generating part 3102 executes the process to put the present event information of the present-following event information currently output on the following event information of the present-following event information to be newly output. Then the processed present-following event information is output.

Further, while the present-following event information, which has chosen the program on the air as the following event, is being output in response to input of the program start notification that does not follow the transmission schedule due to occurrence of an interrupt, if another interrupt program in turn takes place and hence the present-following event information outputting part 3101 receives another program start notification that does also not follow the transmission schedule, new present-following event information is generated and output according to the procedures shown in Figs. 33A and 33B. In this case, the following event information of the previous present-following event information is described on the following event information of the present-following event information to be newly generated.

Such processing makes it possible to quickly output present-following event information adapted to program interrupt broadcasting.

Thus the system executes the process to generate program-interrupted present-following event information in the program-interrupted present-following event information generating part 3102 to allow output of the present-following event information adapted to program interrupts even if the program-interrupted schedule registering part cannot afford the time to register a program-interrupted schedule, and therefore the present-following event information outputting part 3101 receives, from the program start controlling part 205, a program start notification that does not follow the program schedule.

### INDUSTRIAL APPLICABILITY

It is apparent from the above description that the program guide information generating and outputting system can quickly output program guide information even if the program is to be rushed into broadcasting on an unscheduled channel due to an external trigger.

Further, the system can quickly output event relay information that informs the receiver of shifting the program on the air to another channel by putting the event relay information on the present-following event information adapted to event relay broadcasting.

Furthermore, the system can quickly output the present-following event information adapted to program interrupt broadcasting, and if the system has to be rushed into the program interrupt broadcasting, it can deal with the program interrupt properly.

Consequently, the receiver can change the recording conditions according to the event relay or program interrupt broadcasting to perform the pre-programmed recording securely.

## Claims

1. A program guide information generating and outputting system, which includes a program schedule editing part for editing program information and a program schedule, a program guide information managing part for managing the program information and the program schedule edited, a present-following event information generating part that receives the program information and the program schedule to generate single event information and a present-following event information transmission schedule, a program start controlling part for outputting a program start notification, and a present-following event information outputting part that generates present-following event information from the single event information and the present-following event information transmission schedule and outputs the same in response to input of the program start notification, said system comprising
an immediate update-capable single event information generating part that generates, in advance, from the above-mentioned program information, single event information corresponding to all channels that can be handled by the system.

2. A program guide information generating and outputting system according to claim 1, wherein said immediate update-capable single event information generating part generates the immediate update-capable single event information that carries the program identifier described in the program information and channel identifiers other than the channel identifier of the program broadcasting channel described on the program schedule.

3. A program guide information generating and outputting system according to claim 1 or 2, wherein when the program start notification does not follow the present-following event information transmission schedule, said present-following event information outputting part generates the present-following event information by using the immediate update-capable single event information.

4. A program guide information generating and outputting system according to claim 1, wherein said program guide information managing part limits the amount of data for the program schedule to be sent to said present-following event information generating part to a certain number of days, whereby said present-following event information generating part has only to generate a present-following event information transmission schedule for the certain number of days.

5. A program guide information generating and outputting system according to claim 1, wherein said present-following event information generating part limits the amount of transmission data for the generated present-following event information transmission schedule to output data for a certain number of days to said present-following event information outputting part.

6. A program guide information generating and outputting system according to claim 1, further comprising:
an event relay information generating part for generating single event information with event relay information by attaching the event relay information to the single event information; and
an event-relayed program starting control part for outputting an event relay notification before switching channels for event relay broadcasting, wherein when receiving the event relay notification, said present-following event information outputting part outputs the present-following event information generated by using the single event information with the event relay information.

7. A program guide information generating and outputting system according to claim 6, wherein
said event relay information generating part generates in advance the single event information with the event relay information in which at least switching destination channel and program identifiers are set as not being set, and
said present-following event information outputting part sets the switching destination channel and program identifiers acquired from the event relay notification for the single event information with the event relay information to generate the present-following event information by using the single event information with the event relay information concerned.

8. A program guide information generating and outputting system according to claim 7, wherein said event relay information generating part generates in advance the single event information with the event relay information for all single event information.

9. A program guide information generating and outputting system according to claim 7, wherein said program schedule editing part registers possible programs for event relay broadcasting, and said event relay information generating part generates in advance the single event information with the event relay information for single event information on the registered programs.

10. A program guide information generating and outputting system according to claim 6, wherein said event relay information generating part acquires the event relay notification from said present-following event information outputting part, which has already received the event relay notification, to generate and output the single event information with the event relay information to said present-following event information outputting part.

11. A program guide information generating and outputting system according to claim 1, further comprising:
a program-interrupted schedule registering part for generating and registering a program interrupted schedule in said program schedule editing part; and
a program-interrupted schedule generating part for generating, on the basis of the program-interrupted schedule, a present-following event information transmission schedule that sets the interrupt program as the present event and the interrupted program as the following event, wherein
said present-following event information outputting part generates the present-following event information from the present-following event information transmission schedule.

12. A program guide information generating and outputting system according to claim 11, further comprising
a program-interrupted present-following event information generating part for generating present-following event information adapted to program interrupt broadcasting in accordance with instructions from said present-following event information outputting part, wherein
said present-following event information outputting part outputs the present-following event information generated in said program-interrupted present-following event information generating part.

13. A program guide information generating and outputting system according to claim 12, wherein said program-interrupted present-following event information generating part generates the present-following event information by setting information acquired form the program start notification as the present information, and information acquired from the present event information of the present-following event information currently output as the following event.

14. A program guide information generating and outputting system according to claim 13, wherein while the present-following event information generated by said program-interrupted present-following event information generating part is outputting, if another program start notification that does not follow the program schedule as well is in turn received, said program-interrupted present-following event information generating part generates the present-following event information by setting information acquired from the program start notification as the present event, and the following event information of the present-following event information currently output as the following event information.
